# EUROPEAN PATENT APPLICATION

(11) **EP 4 425 669 A1**
(43) Date of publication of application: **04.09.2024**
(21) Application number: 22946090.2
(22) Date of filing: 13.06.2022
(51) Int. Cl.: H01M 50/258, H01M 50/209, H01M 50/244, H01M 50/249

(54) **BATTERY PACK AND ELECTRICAL APPARATUS**

(71) Applicant: Contemporary Amperex Technology Co., Limited, Ningde, Fujian 352100 (CN)
(72) Inventor: SUN, Zhanyu, Ningde, Fujian 352100 (CN); CHEN, Xingdi, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2022/098355
(87) International publication number: WO 2023/240389

(57) **Abstract**

The present application relates to a battery pack (100) and a power consuming device. The battery pack includes a battery cell (20) and an enclosure (10), where the enclosure (10) encloses an accommodation chamber (s), the enclosure (10) includes a bearing member (11a) located at a top of the enclosure and configured to delimit the accommodation chamber (s), and the battery cell (20) is accommodated in the accommodation chamber (s) and hung from the bearing member (11a).

## Description

### Technical Field

The present application relates to the field of battery technologies, and particularly relates to a battery pack and a power consuming device.

### Background Art

As new energy technologies become increasingly mature, new energy vehicles have gradually attracted people's attention. The main core technology of new energy vehicles lies in battery packs, as the safety and stability of the battery pack directly determine the overall performance of the vehicle.

The existing battery packs have a relatively weak ability to withstand external forces, which restricts their practical applications.

### Summary of the Invention

In view of this, the present application provides a battery pack and a power consuming device.

In a first aspect, the present application provides a battery pack. The battery pack includes a battery cell and an enclosure, where the enclosure encloses an accommodation chamber, the enclosure includes a bearing member located at a top of the enclosure and configured to delimit the accommodation chamber, and the battery cell is accommodated in the accommodation chamber and hung from the bearing member.

According to the technical solution of the present application, in this case, when the battery pack is maintained, the battery cell may be assembled on or disassembled from the bearing member at a lower portion. Especially in a case where the bearing member serves as at least a part of a chassis of a vehicle and is subjected to a force, it is only required to disassemble or assemble the battery cell at the lower portion of the bearing member without disassembling the bearing member such that the battery pack can be conveniently maintained. Moreover, the battery cell hung from the bearing member can enhance strength of the bearing member, and further improve stiffness of a top of the battery pack.

In some embodiments, an outer surface of the battery cell facing the bearing member is a first outer surface, the battery cell includes electrode terminals, and the electrode terminals are arranged on an outer surface of the battery cell other than the first outer surface. In this case, the electrode terminals are located on the outer surface of the battery cell other than the first outer surface, and various components (such as a sampling wire harness, a high-voltage wire harness and a protective structure) connected to all electrode terminals may be arranged through a space between the battery cell and the bottom cover and/or a space between the battery cell and an inner side surface of a main body such that all the components can be more conveniently arranged. Moreover, in this case, the first outer surface provided with no electrode terminals is connected to the bearing member, such that the battery cell is attached to the bearing member. A space between the battery cell and the bearing member can be reduced, thus improving the space utilization rate of the battery pack.

In some embodiments, the battery cell is provided with a second outer surface facing away from the first outer surface, and the electrode terminals are arranged on the second outer surface. In this case, a buffer space is provided between the second outer surface and the bottom cover, and the portions, extending out of the battery cell, of the electrode terminals are located in the buffer space. In this way, a wire harness and a connecting sheet that are connected to the electrode terminals can be arranged in the buffer space. Moreover, the buffer space can further prevent an external force hitting the bottom cover from acting on the battery cell such that the battery cell will not be damaged. Therefore, the buffer space not only can interrupt an influence of the external force, but also can be used for a layout of the wire harness, etc., such that double benefits are achieved.

In some embodiments, the battery cell is bonded to the bearing member. In this case, the battery cell and the bearing member can be conveniently connected to each other, and the structure of the battery pack can be simplified.

In some embodiments, the enclosure includes a bottom cover and a frame, the frame encloses a through cavity that is open at two ends in a vertical direction, the bottom cover and the bearing member close the two ends, facing away from each other, of the cavity in the vertical direction respectively, and the bottom cover, the frame and the bearing member jointly enclose the accommodation chamber. In this case, the frame is taken as a foundation, and the bearing member and the bottom cover are connected to two ends of the frame in the vertical direction respectively, such that the accommodation chamber of the battery pack is formed. Thus, the structure of the enclosure is relatively simple.

In some embodiments, the bearing member and the frame are fixedly connected or integrally formed. In a case where the bearing member and the frame are integrally formed, a main body is integrally formed, and the enclosure can be assembled only by connecting the main body to the bottom cover. Thus, the enclosure can be conveniently assembled. In a case where the bearing member and the frame are fixedly connected, a forming process for the bearing member and the frame is relatively easy. Thus, process cost of the enclosure can be reduced.

In some embodiments, the bearing member is provided with a bearing portion and a connecting portion, the connecting portion encloses and is connected to an edge of the bearing portion, the bearing portion is configured to delimit the accommodation chamber, and the connecting portion is connected to the frame; and the battery cell is arranged on a surface of the bearing portion. In this case, the bearing member delimits the accommodation chamber by means of the bearing portion, and is connected to structures of the main body other than the bearing member by means of the connecting portion. Thus, the structure is clear.

In some embodiments, the bearing portion protrudes in a direction away from the accommodation chamber relative to the connecting portion. In a case where the bearing portion protrudes in the direction away from the accommodation chamber relative to the connecting portion, the bearing member may serve as a reinforcing structure of the bearing member, so as to improve bending resistance of the bearing member.

In some embodiments, the bottom cover is provided with a cover portion and a mounting portion, the mounting portion encloses and is connected to an edge of the cover portion, the cover portion is configured to delimit the accommodation chamber, and the mounting portion is mounted to the frame. In this case, the bottom cover delimits the accommodation chamber by means of the cover portion, and is connected to the main body by means of the mounting portion. Thus, the structure is clear, and mounting is convenient.

In some embodiments, the cover portion protrudes in a direction away from the accommodation chamber relative to the mounting portion. In this case, the cover portion protrudes relative to the mounting portion, and the cover portion of the bottom cover can serve as a reinforcing structure of the bottom cover, so as to improve bending resistance of the bottom cover.

In some embodiments, the bottom cover and the battery cell are spaced apart. In this case, an external force acting on the bottom cover can be prevented from being transmitted to the battery cell such that the battery cell can be prevented from being damaged. Especially in a case where the battery pack is mounted at a bottom of a vehicle and the bottom cover is located at a lowest portion of the battery pack, stones, etc. on the ground are likely to fly to the bottom of the battery pack to hit the bottom cover in a driving process of the vehicle. In this case, the buffer space can interrupt transmission of the external force to the battery cell such that the battery cell will not be affected.

In some embodiments, in the vertical direction, a height He of the battery cell and a height Hp of the battery pack satisfy: 0.02 ≤ Hc/Hp ≤ 0.98. In this case, the battery pack will not catch fire or explode. Moreover, a space utilization rate of the battery pack is relatively high, energy density of the battery pack is relatively high, and the range of the battery pack is relatively long.

In a second aspect, the present application further provides a power consuming device. The power consuming device includes the above battery pack, and the battery pack is configured to provide electrical energy for the power consuming device.

In some embodiments, the battery pack is arranged at a bottom of a bodywork of the vehicle. In this case, the battery pack is arranged at the bottom of the bodywork, and will not occupy a space in the bodywork, which is conducive to reduction of a size and weight of the bodywork.

In some embodiments, in the vertical direction, distance L between the bearing member and the bodywork satisfies: L ≥ 0. In this case, when distance L between the bearing member and the bodywork is equal to zero, the battery pack can have a relatively large electric quantity and relatively high energy density, such that the driving range of the vehicle is long. In a case where distance L between the bearing member and the bodywork is greater than zero, the bearing member can be relatively flexibly mounted.

In some embodiments, the battery pack is mounted to the bodywork by means of the bearing member. In a case where the battery cell is arranged on the bearing member, the structure formed by the battery cell and the bearing member is connected to the bodywork such that top strength of the battery pack can be improved, and further mounting strength of the battery pack can be improved.

In some embodiments, the bearing member is configured to form at least a part of a chassis of the bodywork. In this case, a space occupied by a gap between a conventional chassis and the battery pack can be distributed to the battery pack to increase a space of the battery pack, which is conducive to an increase in energy density of the battery pack, which in turn can improve the driving range of the vehicle.

Details of one or more embodiments of the present application will be provided in the following accompanying drawings and description. Other features, objectives and advantages of the present application will become obvious from the description, accompanying drawings and claims.

### Brief Description of the Drawings

Various other advantages and benefits will become obvious to those of ordinary skill in the art upon reading the following detailed description of preferred implementations. Accompanying drawings are merely for the purpose of illustrating the preferred implementations and are not to be construed as limiting the present application. Moreover, the same reference numerals represent the same components throughout the accompanying drawings. In figures:
FIG. 1 is a schematic diagram of a vehicle according to some embodiments of the present application;
FIG. 2 is a schematic diagram of a battery cell according to some embodiments of the present application;
FIG. 3 is a schematic diagram of a battery pack according to some embodiments of the present application;
FIG. 4 is an exploded view of a structure of the battery pack shown in FIG. 3;
FIG. 5 is a schematic diagram of a bottom cover according to some embodiments of the present application;
FIG. 6 is a top view of the bottom cover shown in FIG. 5;
FIG. 7 is a front view of the bottom cover shown in FIG. 5;
FIG. 8 is a schematic diagram of a bottom cover according to some other embodiments of the present application;
FIG. 9 is a sectional view of the battery pack shown in FIG. 4;
FIG. 10 is a schematic diagram of an orthographic projection of the bottom cover shown in FIG. 6 in a vertical direction;
FIG. 11 is a schematic diagram of an outline of a battery cell according to some embodiments of the present application;
FIG. 12 is a front view of the battery cell shown in FIG. 11;
FIG. 13 is a schematic diagram of a bearing member according to some embodiments of the present application;
FIG. 14 is a schematic diagram of a bearing member according to some other embodiments of the present application;
FIG. 15 is a diagram of an orthographic projection of the bearing member shown in FIG. 14 in a vertical direction;
FIG. 16 is a front view of the battery pack shown in FIG. 4;
FIG. 17 is a schematic diagram of application of a battery pack to a bodywork according to some embodiments of the present application;
FIG. 18 is a first exploded state diagram of the structure shown in FIG. 17;
FIG. 19 is a second exploded state diagram of the structure shown in FIG. 17; and
FIG. 20 is a schematic diagram of a mounting relation between a battery pack and a bodywork according to some embodiments of the present application.

1000. vehicle, 100. battery pack, 200. bodywork, 10. enclosure, 11. main body, 11a. bearing member, 11a1. bearing portion, 11a2. connecting portion, 11b. frame, 12. bottom cover, 12a. cover portion, 12b. mounting portion, 12c. fixing hole, 13. fastening member, s. accommodation chamber, q. cavity, f. bearing surface, f1. first bearing edge, f2. second bearing edge, f3. third bearing edge, f4. fourth bearing edge, d. feature surface, d1. first feature edge, d2. second feature edge, d3. third feature edge, d4. fourth feature edge, 20. battery cell, 21. end cover, 21a. electrode terminal, 22. housing, 23. electrode assembly, m1. first outer surface, m2. second outer surface, and m3. third outer surface.

### Detailed Description of Embodiments

Embodiments of the technical solutions of the present application will be described in detail below in combination with accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "include", "comprise" and "provided with" and their any variations in the description and claims of the present application as well as the above brief description of accompanying drawings are intended to cover non-exclusive inclusions.

In the description of embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of embodiments of the present application, "a plurality of' means two or above, unless otherwise explicitly and specifically defined.

Reference to an "embodiment" mentioned herein means that specific features, structures or features described in combination with the embodiment can be encompassed in at least one embodiment of the present application. The phrase at various locations in the description does not certainly refer to the same embodiment, or an independent or alternative embodiment exclusive of other embodiments. Those skilled in the art understand explicitly or implicitly that the embodiment described herein may be combined with other embodiments.

In the description of embodiments of the present application, the term "and/or" is merely intended to describe the associated relationship of associated objects, indicating that three relationships can exist, for example, A and/or B may include: only A exists, both A and B exist, and only B exists. Moreover, the character "/" herein generally indicates an "or" relationship between the associated objects.

In the description of embodiments of the present application, term "a plurality of" means two or above (including two), similarly, the term "a plurality of groups" means two or above groups (including two groups), and "a plurality of pieces" means two or above pieces (including two pieces).

In the description of embodiments of the present application, the orientation or position relationships indicated by the technical terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on orientation or position relationships shown in accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of embodiments of the present application, unless otherwise explicitly specified and defined, technical terms such as "mount", "connected", "connect" and "fix" should be understood in a broad sense, for example, "connected" may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in embodiments of the present application can be understood according to specific situations.

At present, from the perspective of development of the market situation, battery packs are used increasingly widely. The battery packs are not only used in energy storage power systems such as hydraulic power, thermal power, wind power and solar power stations, but also widely used in electric vehicles such as electric bicycles, electric motorcycles and electric vehicles, military equipment, aerospace and other fields. With the continuous expansion of the application field of the battery packs, market demand for the battery packs is also expanding.

The inventors notice that in an existing battery pack, a battery cell is generally arranged on a supporting member in an enclosure. In a case where the enclosure has a weak ability to bear an external force, the battery pack is applied within a limited range.

In order to improve applicability of the battery pack, the applicant finds through a research that a bearing ability of the battery pack can be increased by improving strength of the enclosure.

On the basis of the above considerations, in order to improve applicability of the battery pack, the inventors design a battery pack through in-depth research. The battery pack includes an enclosure and a battery cell, the enclosure encloses an accommodation chamber, the enclosure includes a bearing member located at a top and configured to delimit the accommodation chamber, and the battery cell is accommodated in the accommodation chamber. The bearing member is provided with a bearing surface facing the accommodation chamber, the bearing surface is configured as a flat surface, and the battery cell is arranged on the bearing surface. In this case, when the battery pack is assembled, the bearing member may be mounted first and then the battery cell is hung from bottom to top. Especially in a case where the bearing member serves as at least a part of a chassis of a vehicle, the bearing member serving as a bearing structure may be mounted to a mounting body first and then the battery cell is hung from bottom to top. In this way, the battery pack can be more conveniently assembled. The battery cell hung from the bearing member can enhance strength of the bearing member, and further improve stiffness of a top of the battery pack. In this way, an application scene of the battery pack can be extended to a scene where the top is subjected to a force. For example, the battery pack is used as a part of a chassis of a vehicle.

The battery pack disclosed in an embodiment of the present application may be used in, but is not limited to, a power consuming device such as a vehicle, a ship or an aircraft. A power source system of the power consuming device may be composed of the battery pack disclosed in the present application. The mounting body involved in the present application is a structure configured to mount a battery pack in a power consuming device.

An embodiment of the present application provides a power consuming device with a battery pack as a power source. The power consuming device may be, but is not limited to, a mobile phone, a tablet, a notebook computer, an electric toy, an electric tool, an electromobile, an electric vehicle, a ship, or a spacecraft, etc. The electric toy may include a stationary or mobile electric toy, such as a game console, an electric vehicle toy, an electric ship toy and an electric airplane toy. The spacecraft may include an airplane, a rocket, a space shuttle, a spaceship, etc.

For convenience of illustration in the following examples, an example in which a power consuming device in an embodiment of the present application is a vehicle 1000 is taken for illustration.

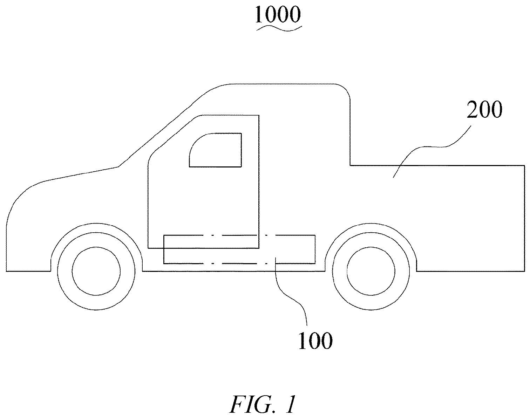

With reference to FIG. 1, a schematic diagram of a vehicle 1000 according to some embodiments of the present application is shown in FIG. 1. The vehicle 1000 may be a fuel vehicle, a gas vehicle or a new energy vehicle. The new energy vehicle may be a battery electric vehicle, a hybrid electric vehicle or an extended-range vehicle, etc. The vehicle 1000 is internally provided with a battery pack 100, and the battery pack 100 may be arranged at a bottom, a head or a tail of the vehicle 1000. The battery pack 100 may be configured to supply power to the vehicle 1000. For example, the battery pack 100 may serve as a power source for operating the vehicle 1000. The vehicle 1000 may further include a controller and a motor, and the controller is configured to control the battery pack 100 to supply power to the motor. For example, operating electricity requirements during start-up, navigation and driving of the vehicle 1000 are achieved.

In some embodiments of the present application, the battery pack 100 may not only serve as a power source for operating the vehicle 1000, but also serve as a power source for driving the vehicle 1000, and replaces or partially replaces fuel or natural gas to provide driving power for the vehicle 1000.

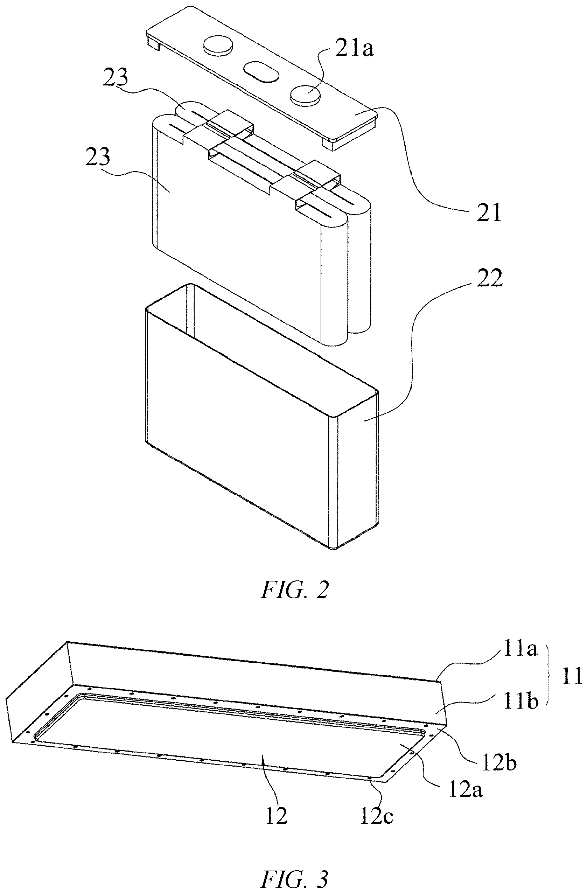

With reference to FIG. 2, a schematic diagram of the vehicle 1000 according to some embodiments of the present application is shown in FIG. 2. A battery cell 20 refers to a minimum unit constituting the battery pack 100. As shown in FIG. 2, the battery cell 20 includes an end cover 21, a housing 22, an electrode assembly 23 and other functional components.

The end cover 21 refers to a component that closes an opening of the housing 22 so as to isolate an internal environment of the battery cell 20 from an external environment. Without limitation, a shape of the end cover 21 may be adapted to a shape of the housing 22 such that the end cover can match the housing 22. Optionally, the end cover 21 may be made of a material (such as an aluminum alloy) having certain hardness and strength, such that the end cover 21 is not likely to be deformed when being pressed and impacted. Thus, the battery cell 20 can have higher structural strength, and safety can be improved. Functional components, such as electrode terminals 21a, may be arranged on the end cover 21. The electrode terminals 21a may be configured to be electrically connected to the electrode assembly 23, so as to output or input electrical energy of the battery cell 20. In some embodiments, the end cover 21 may be further provided with a pressure relief mechanism configured to release an internal pressure when the internal pressure or temperature of the battery cell 20 reaches a threshold. The end cover 21 may be made of various materials, such as copper, iron, aluminum, stainless steel, an aluminum alloy and plastic, which is not specifically limited in embodiments of the present application. In some embodiments, an insulating member may be further arranged on an inner side of the end cover 21, and the insulating member may be configured to isolate an electrical connecting portion 11a2 in the housing 22 from the end cover 21, such that a risk of a short circuit is reduced. As an example, the insulating member may be made of plastic, rubber, etc.

The housing 22 is an assembly configured to match the end cover 21, such that an internal environment of the battery cell 20 is formed. The formed internal environment may be configured to accommodate an electrode assembly 23, an electrolyte and other components. The housing 22 and the end cover 21 may be independent components, an opening may be provided on the housing 22, and the end cover 21 may close the opening, such that an internal environment of the battery cell 20 is formed. Without limitation, the end cover 21 and the housing 22 may be integrated. Specifically, the end cover 21 and the housing 22 may form a common junction surface before other components enter the housing, and when it is required to seal an interior of the housing 22, the end cover 21 closes the housing 22. The housing 22 may have various shapes and sizes, such as a cuboid, a cylinder and a hexagonal prism. Specifically, the shape of the housing 22 may be determined according to a specific shape and a size of the electrode assembly 23. The housing 22 may be made of various materials, such as copper, iron, aluminum, stainless steel, an aluminum alloy and plastic, which is not specifically limited in embodiments of the present application.

The electrode assembly 23 is a component on which an electrochemical reaction occurs in the battery cell 20. One or more electrode assemblies 23 may be contained within the housing 22. The electrode assembly 23 is mainly formed by winding or stacking a positive plate and a negative plate, and a separator is generally arranged between the positive plate and the negative plate. Portions of the positive plate and the negative plate having active materials constitute a main body 11 of the electrode assembly 23, and portions of the positive plate and the negative plate having no active material constitute same. A positive tab and a negative tab may be located at one end of the main body 11 together or at two ends of the main body 11 respectively. In charge and discharge processes of a battery, the positive active material and the negative active material react with the electrolyte, and the tabs are connected to the electrode terminals 21a such that a current loop is formed.

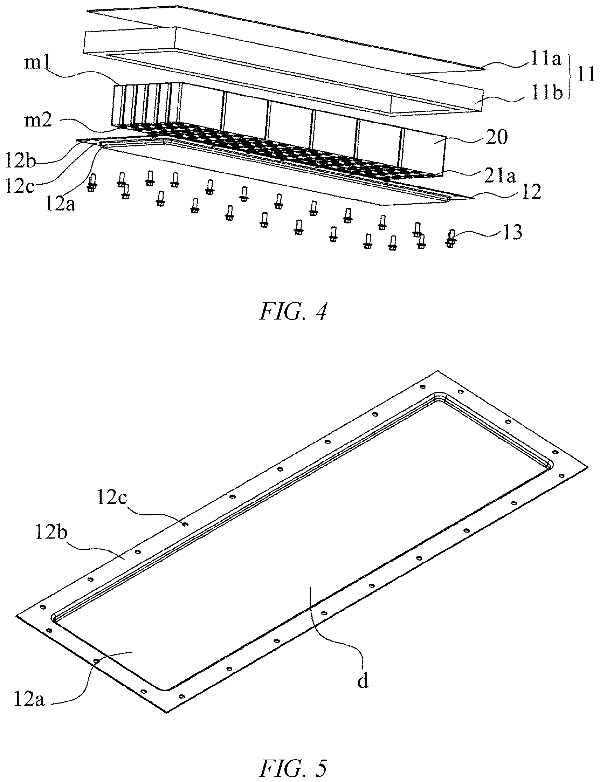

FIG. 3 is a schematic diagram of a battery pack 100 according to some embodiments of the present application. FIG. 4 is an exploded view of a structure of the battery pack 100 shown in FIG. 3. According to some embodiments of the present application, with reference to FIGS. 3 and 4, an embodiment of the present application provides a battery pack 100. The battery pack includes a battery cell 20 and an enclosure 10, the enclosure 10 forms an accommodation chamber s, and the battery cell 20 is accommodated in the accommodation chamber s.

In the battery pack 100, a plurality of battery cells 20 may be arranged. The plurality of battery cells 20 may be connected in series, in parallel or in series and parallel. The series-parallel connection means that the plurality of battery cells 20 are connected both in series and in parallel. The plurality of battery cells 20 may be directly connected in series, in parallel or in series and parallel, and then a whole formed by the plurality of battery cells 20 is accommodated in an enclosure 10. Certainly, the battery pack 100 may be in a form that a plurality of battery cells 20 are firstly connected in series, in parallel or in series and parallel to form a battery module, and then a plurality of battery modules are connected in series, in parallel or in series and parallel to form a whole and are accommodated in the enclosure 10. The battery pack 100 may further include other structures. For example, the battery pack 100 may further include a busbar component configured to achieve an electric connection between the plurality of battery cells 20. Each battery cell 20 may be a secondary battery or a primary battery; and may be a lithium-sulfur battery, a sodium-ion battery or a magnesium-ion battery, but is not limited thereto. The battery cell 20 may be in a shape of a cylinder, a flat body, a cuboid, etc.

The enclosure 10 may be in various shapes, such as a cylinder, a cuboid, etc., and the specific structure of the enclosure 10 may be in various structural modes.

In some embodiments, with reference to FIGS. 3 and 4, the enclosure 10 includes a main body 11 and a bottom cover 12 arranged at a bottom of the main body 11. The bottom cover 12 and the main body 11 jointly enclose an accommodation chamber s for accommodating the battery cell 20.

The main body 11 may be an integrally formed structure, or may be formed by assembling a plurality of parts. The main body 11 may be a hollow housing 22, and delimits a first space, a bottom of the first space is open, and the bottom cover 12 closes an opening of the first space. The bottom cover 12 may be a hollow structure having an open side, and may have a second space. The second space of the bottom cover 12 and the first space of the main body 11 integrally form the accommodation chamber s. The bottom cover 12 may not have a space for forming the accommodation chamber s. In a case where the bottom cover 12 covers the opening of the first space of the main body 11, the bottom cover 12 seals the first space of the main body 11, and the bottom cover and the first space enclose the accommodation chamber s equivalent to the first space. In this case, the bottom cover 12 may be of a plate-shaped structure. Certainly, the accommodation chamber s of the enclosure 10 may be formed by a part of the first space of the main body 11. In this case, the bottom cover 12 may close the opening of the first space and may be recessed towards the first space to occupy part of the first space, and the accommodation chamber s of the enclosure 10 is formed by excluding the part of the first space occupied by the bottom cover 12.

Understandably, in this case, the bottom cover 12 is located at the bottom of the enclosure 10, and is configured to delimit the accommodation chamber s together with the main body 11. Specifically, the bottom cover 12 may be of, but is not limited to, a plate-shaped structure, a block-shaped structure, etc., and may be in, but is not limited to, a flat-plate shape, a bent-plate shape, etc.

When the battery cell 20 is located in the accommodation chamber s, the battery cell 20 may be arranged on the bottom cover 12 and/or the main body 11.

When the main body 11 is formed by assembling a plurality of parts, the battery cell 20 may be arranged on one of the parts, or may be arranged on all the parts. In an embodiment, the main body 11 may include a top cover (not shown in the feature), a surrounding plate (not shown in the feature) and a supporting plate (not shown in the feature). The surrounding plate encloses a third space with openings at two ends in a vertical direction, the top cover and the bottom cover 12 hermetically close the two ends of the third space in the vertical direction, respectively, and the top cover, the surrounding plate and the bottom cover 12 jointly enclose the accommodation chamber s. The supporting plate is located in the third space, and the battery cell 20 is supported on the supporting plate. In other embodiments, the main body 11 may include a bearing member 11a and a frame 11b described below, and see the following description for details.

The bottom cover 12 and the main body 11 may be fixed to each other through welding, hot-melt connection, bonding, fastening connection, snap fitting, etc. The fastening connection means that connection is implemented by means of a fastening member 13, and the fastening member 13 includes a bolt, a latch, a rivet, a pin, a screw and other components. The snap fitting means that fixation is implemented by means of a snap-fit structure. For example, the bottom cover 12 is provided with a snap-fit, the main body 11 is provided with a snap groove, and when the snap-fit is snap-fitted in the snap groove, the bottom cover 12 and the main body 11 are fixed to each other through snap-fitting. Certainly, a connection method between the bottom cover 12 and the main body 11 is not limited thereto, which will not exhaustive in the present application.

In some embodiments, the bottom cover 12 is connected to the main body 11 hermetically, and the bottom cover and the main body jointly form a closed accommodation chamber s.

The bottom cover 12 is connected to the main body 11 hermetically through various methods, which include, but are not limited to: a sealing member is arranged between the bottom cover 12 and the main body 11, and the bottom cover 12 is connected to the main body 11 hermetically by means of the sealing member; the bottom cover 12 is connected to the main body 11 hermetically by means of a sealant; and the bottom cover 12 is connected to the main body 11 in a mutually pluggable manner, and the bottom cover is connected to the main body hermetically by means of a blocking structure formed by a plug surface.

In this case, the bottom cover 12 of the enclosure 10 of the battery pack 100 and the main body 11 of the enclosure enclose a sealed accommodation chamber s, and no other sealing structures are required to be additionally arranged in the enclosure 10. Thus, the structure of the battery pack 100 can be simplified, cost of the battery pack 100 can be reduced, and safety and service life of the battery pack 100 can be ensured.

In the description of the present application, the bottom cover 12 of the battery pack 100 is located at a bottom of the main body 11, that is, the bottom cover 12 is located at the bottom of the main body 11 in an up-down orientation as shown in FIGS. 3 and 4. In an actual usage situation, the up-down orientation shown in FIGS. 3 and 4 may be, but is not limited to, a vertical direction, which depends on an actual mounting situation of the battery pack 100. It should be noted that in the following description of the present application, a positional relationship, size, etc. of each structure of the battery pack 100 are described with reference to the vertical direction, which is not intended to limit a usage mode of the battery pack 100, and is only used for more clear illustration and description of the solution.

In some embodiments, the bottom cover 12 is connected to the main body 11 hermetically by means of a sealing member.

The sealing member refers to a part capable of preventing a fluid, solid particles, etc. from leaking from positions between adjacent junction surfaces, and can prevent external impurities such as dust, moisture, etc. from invading into the battery pack 100. The sealing member connecting the main body 11 to the bottom cover 12 hermetically means that the sealing member is connected between two opposite surfaces of the main body 11 and the bottom cover 12, and ring-shaped contact interfaces are provided between the sealing member and the two surfaces such that external moisture can be prevented from entering the battery pack 100 through the contact interfaces between the sealing member and the two surfaces, and further a sealing effect is achieved.

The sealing member may be a sealing ring or a sealing gasket. Specifically, the sealing member may be made of materials such as rubber and silica gel. Specifically, the sealing member may be an O-shaped sealing member, a square sealing member, a profiled sealing member, etc. The specific shape of the sealing member may be adapted to the shapes of the two opposite surfaces of the bottom cover 12 and the main body 11. For example, in a case where the two opposite surfaces of the bottom cover 12 and the main body 11 are annular surfaces, the sealing member may be an O-ring sealing member.

In this case, the bottom cover 12 is connected to the main body 11 hermetically by means of a sealing member, such that sealing is reliable, and cost is low.

It should be noted that after being connected to the main body 11 hermetically by means of the sealing member, the bottom cover 12 may be further fixedly connected to the main body 11 through other methods. Other methods include, but are not limited to, snap fitting, pluggable connection, screw connection, riveting, welding, bonding, etc. Understandably, in a case where the bottom cover 12 is connected to the main body 11 by means of a sealant, according to adhesiveness of the sealant, if the adhesiveness of the sealant is desirable enough to satisfy a requirement (that is, the bottom cover 12 and the main body 11 are fixed to each other without separation), the bottom cover may be fixedly connected to the main body not through other methods.

In some embodiments, the bottom cover 12 is detachably connected to the bottom of the main body 11.

The bottom cover 12 being detachably connected to the main body 11 means that when the bottom cover 12 is connected to the main body 11, relative to the main body 11, the bottom cover 12 has a first state in which the bottom cover is completely connected to the main body 11 and the accommodation chamber s is formed, and a second state in which the bottom cover is not completely connected to or separated from the main body 11 and the battery cell 20 can be exposed. The bottom cover 12 can be switched from the first state to the second state under the operation of an external force, and can be switched from the second state to the first state without damaging any part in this process.

In a case where relative to the main body 11, the bottom cover 12 has the second state in which the bottom cover is not completely connected to the main body 11 and the accommodation chamber s is opened, the bottom cover 12 may be mounted to the main body 11 through a method as follows: the bottom cover 12 is rotatably connected to the main body 11 and may be fixedly connected to the main body by means of a fastening member 13 or through snap-fitting. When the bottom cover 12 is rotated relative to the main body 11 to close the accommodation chamber s, the bottom cover 12 may be fixedly connected to the main body 11 by means of the fastening member 13 or through snap-fitting, and the battery cell 20 is accommodated in the accommodation chamber s and is not visible. In this case, the bottom cover 12 is in the first state. When the fastening member 13 is detached or snap-fitting is released, the bottom cover 12 may rotate relative to the main body 11 to a position where the accommodation chamber s is opened and the battery cell 20 is exposed. In this case, the bottom cover 12 is in the second state. The bottom cover 12 being rotatably connected to the main body 11 may be, but is not limited to, the bottom cover 12 being rotatably connected to the main body 11 by means of a rotary shaft.

In a case where relative to the main body 11, the bottom cover 12 has the second state in which the bottom cover is separated from the main body 11 and the accommodation chamber s is opened, the bottom cover 12 may be mounted to the main body 11 through a method as follows: the bottom cover 12 is fixedly connected to the main body 11 by means of a fastening member 13 or through snap-fitting. When the fastening member 13 is mounted to the bottom cover 12 and the main body 11 or the bottom cover 12 is in snap-fit with the snap-fit structure of the main body 11, the bottom cover 12 is completely fixed to the main body 11, the bottom cover and the main body jointly form the accommodation chamber s, and the battery cell 20 is accommodated in the accommodation chamber s and is not visible. In this case, the bottom cover 12 is in the first state. When the fastening member 13 is detached or all snap-fitting is released, the bottom cover 12 can be separated from the main body 11, such that the battery cell 20 is exposed. In this case, the bottom cover 12 is in the second state.

When the bottom cover 12 is in the first state, the bottom cover and the main body 11 form an accommodation chamber s for protecting the battery cell 20. When the bottom cover 12 is in the second state, the battery pack 100 is exposed, such that the battery cell 20 can be conveniently maintained or replaced by relevant personnel.

In some embodiments, with reference to FIG. 4, the bottom cover 12 is detachably connected to the main body 11 by means of a fastening member 13.

The fastening member 13 refers to a component capable of fastening and connecting two or more parts (or components) into a whole, and may be, but is not limited to: a screw, a bolt, a rivet, a latch, a pin, a welding stud, etc.

In this case, the bottom cover 12 is detachably connected to the main body 11 by means of the fastening member 13, which not only facilitates disassembly and assembly, but also is simple in structure, economical and practical.

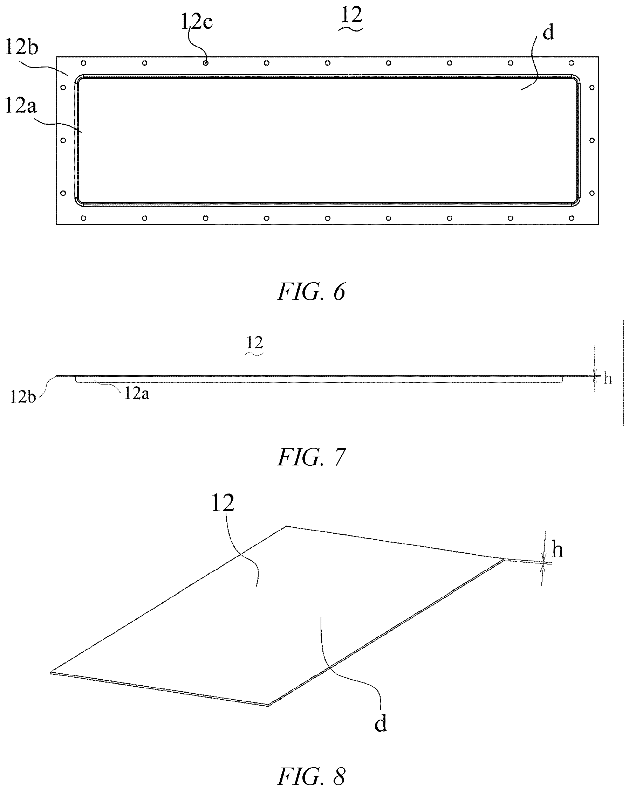

FIG. 5 is a schematic diagram of a bottom cover 12 according to some embodiments of the present application. FIG. 6 is a top view of the bottom cover 12 shown in FIG. 5. FIG. 7 is a front view of the bottom cover 12 shown in FIG. 5. FIG. 8 is a schematic diagram of a bottom cover 12 according to some other embodiments of the present application.

In some embodiments, minimum thickness h of the bottom cover 12 satisfies: 0.2 mm < h < 20 mm.

The thickness of the bottom cover 12 refers to a distance between surfaces on two sides of the bottom cover 12 in a vertical direction on a section in the vertical direction. Minimum thickness h of the bottom cover 12 is a shortest distance between surfaces on two sides of the bottom cover 12 in the vertical direction. In a case where the thickness of the bottom cover 12 is uniform everywhere, the bottom cover 12 may be in a flat-plate shape (as shown in FIG. 8), and the minimum thickness of the bottom cover 12 is a thickness of the bottom cover 12 equal everywhere. In a case where the thickness of the bottom cover 12 is not uniform, the minimum thickness of the bottom cover 12 is a thickness of a thinnest portion of the bottom cover 12.

Specifically, minimum thickness h of the bottom cover 12 may be 0.3 mm, 0.5 mm, 0.8 mm, 1 mm, 1.5 mm, 1.8 mm, 2 mm, 2.5 mm, 2.8 mm, 3 mm, 3.5 mm, 3.8 mm, 4 mm, 4.5 mm, 4.7 mm, 5 mm, 5.5 mm, 5.8 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, 12.5 mm, 13 mm, 13.5 mm, 14 mm, 14.5 mm, 15 mm, 16 mm, 16.5 mm, 17 mm, 17.5 mm, 18 mm, 18.5 mm, 19 mm, or 19.5 mm, etc. Preferably, 0.5 mm ≤ h ≤ 3 mm.

In this case, it is proved that in a case where minimum thickness h of the bottom cover 12 satisfies 0.2 mm < h < 20 mm, weight of the battery pack 100 can be effectively reduced, and structural strength is reasonable.

It should be noted that in the description of the present application, by taking the vertical direction as reference, a "thickness" of a certain structure refers to a distance between surfaces on two sides of the structure in the vertical direction on a section in the vertical direction. The "thickness" is not explained too much in the following description, and reference may be made to the description herein. Certainly, understandably, the vertical direction is only for more convenient description of the solution of the present application, and is not intended to limit the usage mode of the battery pack 100.

In some embodiments, weight m of the battery cell 20 and minimum wall thickness h of the bottom cover 12 satisfy: 0.03 mm/Kg ≤ h/m ≤ 100 mm/Kg.

Weight m of the battery cell 20 refers to weight m of a single battery cell 20. In a case where the battery pack 100 includes a plurality of battery cells 20, the weight of the battery cell 20 is the weight of each battery cell 20.

Specifically, a ratio of minimum wall thickness h of the bottom cover 12 to weight m of the battery cell 20 may be 0.04 mm/Kg, 0.05 mm/Kg, 0.1 mm/Kg, 0.4 mm/Kg, 0.8 mm/Kg, 1 mm/Kg, 1.5 mm/Kg, 2 mm/Kg, 2.5 mm/Kg, 3 mm/Kg, 3.5 mm/Kg, 4 mm/Kg, 5 mm/Kg, 6 mm/Kg, 8 mm/Kg, 10 mm/Kg, 12 mm/Kg, 13 mm/Kg, 15 mm/Kg, 16 mm/Kg, 18 mm/Kg, 20 mm/Kg, 30 mm/Kg, 35 mm/Kg, 40 mm/Kg, 45 mm/Kg, 50 mm/Kg, 55/Kg, 60 mm/Kg, 65 mm/Kg, 68 mm/Kg, 70 mm/Kg, 75 mm/Kg, 80 mm/Kg, 85 mm/Kg, 90 mm/Kg, 95 mm/Kg, or 98 mm/Kg.

**Table 1 Influence of ratio of minimum wall thickness h of bottom cover 12 to weight m of battery cell 20 on safety performance of battery pack 100**

| No. | h (mm) | m (Kg) | h/m (mm/Kg) | Test result |
|---|---|---|---|---|
| 1 | 0.2 | 10 | 0.02 | Caught fire, exploded |
| 2 | 0.5 | 10 | 0.05 | Did not catch fire, did not explode |
| 3 | 1.2 | 3 | 0.4 | Did not catch fire, did not explode |
| 4 | 3 | 1 | 3 | Did not catch fire, did not explode |
| 5 | 5 | 1.5 | 3.33 | Did not catch fire, did not explode |
| 6 | 8 | 1.8 | 4.45 | Did not catch fire, did not explode |
| 7 | 10 | 2 | 5 | Did not catch fire, did not explode |
| 8 | 12 | 1.6 | 7.5 | Did not catch fire, did not explode |
| 9 | 15 | 1.7 | 8.82 | Did not catch fire, did not explode |
| 10 | 20 | 2 | 10 | Did not catch fire, did not explode |
| 11 | 20 | 1 | 20 | Did not catch fire, did not explode |
| 12 | 20 | 0.5 | 40 | Did not catch fire, did not explode |
| 13 | 20 | 0.32 | 62.5 | Did not catch fire, did not explode |
| 14 | 20 | 0.25 | 80 | Did not catch fire, did not explode |
| 15 | 20 | 0.2 | 100 | Did not catch fire, did not explode |

Table 1 shows test results of influences of a plurality of groups of ratios of minimum wall thicknesses h of bottom covers 12 to weights m of battery cells 20 on safety performance of a battery pack 100 in a case where tests are carried out according to the standard of GB 38031-2020 Electric vehicles traction battery safety requirements. It can be seen from Table 1 that in a case where h/m is equal to 0.02 mm/Kg, the battery pack 100 is likely to catch fire and explode. The reason is that structural strength of the battery pack 100 cannot satisfy requirements. In a case where h/M is greater than 0.02 mm/Kg, structural strength of the bottom cover 12 is relatively desirable, and the battery pack 100 is not likely to catch fire and explode. However, too great h/m is likely to cause space waste and too low energy density, such that h/m is preferably not more than 100 mm/Kg.

In this case, it is proved that in a case where minimum thickness h of the bottom cover 12 and weight m of the battery cell 20 satisfy 0.03 mm/Kg ≤ h/m ≤ 100 mm/Kg, the battery pack 100 not only has relatively desirable structural strength, but also has relatively high energy density and is not likely to catch fire and explode.

In some embodiments, with reference to FIGS. 5-7, the bottom cover 12 is provided with a cover portion 12a and a mounting portion 12b, the mounting portion 12b encloses and is connected to an edge of the cover portion 12a, the cover portion 12a is configured to delimit an accommodation chamber s, and the mounting portion 12b is connected to the main body 11.

The cover portion 12a being configured to delimit the accommodation chamber s means that the cover portion 12a and the main body 11 jointly enclose the accommodation chamber s, and the mounting portion 12b is connected to the main body 11 without participating in delimitation of the accommodation chamber s. The cover portion 12a may be a plate-shaped member, a block-shaped member, a flat-plate-shaped member, or a bent-plate-shaped member, which is not specifically limited. It can be seen from FIG. 6 that the mounting portion 12b enclosing the edge of the cover portion 12a means that the mounting portion 12b is continuously arranged along the edge of the cover portion 12a in an end-to-end closed connection structure. Understandably, in a projection in the vertical direction, the mounting portion 12b has a certain width such that an appropriate contact area can be formed between the mounting portion and the main body 11. Thus, not only positioning and mounting between the mounting portion 12b and the main body 11 are convenient, but also a sealing member can be conveniently arranged. Moreover, this solution is further conducive to improvement of sealing performance between the mounting portion 12b and the main body 11.

The cover portion 12a and the mounting portion 12b may be integrally formed. In a case where the bottom cover 12 is made of metal (such as aluminum, iron, stainless steel, etc.), the cover portion 12a and the mounting portion 12b may be integrally formed through pressure casting, forging, hot pressing, cold pressing, etc. In a case where the bottom cover 12 is made of plastic (such as polypropylene (PP), polyethylene (PE), acrylonitrile butadiene styrene (ABS), etc.), the cover portion 12a and the mounting portion 12b may be integrally formed through injection molding. The cover portion 12a and the mounting portion 12b may be separately formed and then connected together. In a case where the cover portion 12a and the mounting portion 12b are made of metal, the cover portion 12a and the mounting portion 12b may be welded or bonded together. In a case where the cover portion 12a and the mounting portion 12b are made of plastic, the cover portion 12a and the mounting portion 12b may be bonded together. Certainly, the cover portion 12a and the mounting portion 12b may be fixedly connected together through other methods such as snap-fitting, riveting, etc.

The cover portion 12a and the mounting portion 12b may be located in the same plane. Specifically, alternatively, two surfaces of the cover portion 12a and the mounting portion 12b 11 facing the main body are in the same plane, and/or two surfaces of the cover portion 12a and the mounting portion 12b facing away from the main body 11 are in the same plane. In a case where the two surfaces of the cover portion 12a and the mounting portion 12b facing the main body 11 are in the same plane, and the two surfaces of the cover portion and the mounting portion facing away from the main body 11 are in the same plane, the cover portion 12a and the mounting portion 12b may form a flat-plate-shaped bottom cover 12 (as shown in FIG. 8).

The cover portion 12a and the mounting portion 12b may not be located in the same plane. Specifically, the cover portion 12a is recessed towards the main body 11 relative to the mounting portion 12b, or the cover portion 12a protrudes away from the main body 11 relative to the mounting portion 12b, which is not specifically limited. A thickness of the cover portion 12a and a thickness of the mounting portion 12b may be equal to or different from each other, which is not specifically limited.

In this case, the bottom cover 12 delimits the accommodation chamber s by means of the cover portion 12a, and is connected to the main body 11 by means of the mounting portion 12b. Thus, the structure is clear, and mounting is convenient.

Understandably, when the bottom cover 12 is connected to the main body 11 hermetically, the bottom cover 12 is connected to the main body 11 hermetically by means of the mounting portion 12b, that is, the mounting portion 12b is connected to the main body 11 hermetically. The mounting portion 12b may be connected to the main body 11 hermetically by means of a sealing member, a sealant, etc., which is not exhaustive. The sealing member may be the sealing member mentioned in the above description, reference may be made to the above description for an arrangement mode of the sealing member, and the difference is that the sealing member is arranged between the mounting portion 12b and the main body 11. In a case where the mounting portion 12b is connected to the main body 11 hermetically by means of a sealant, all surfaces, which are in contact with each other, of the mounting portion 12b and the main body 11 may be coated with the sealant.

Understandably, in a case where the bottom cover 12 is detachably connected to the main body 11, the bottom cover 12 is detachably connected to the main body 11 by means of the mounting portion 12b, that is, the mounting portion 12b is detachably connected to the main body 11. For a detachable connection method between the mounting portion 12b and the main body 11, reference may be made to the detachable connection method between the bottom cover 12 and the main body 11 described in the above description, and only a portion of the bottom cover 12 detachably connected to the main body 11 is set as the mounting portion 12b. Thus, the detachable connection method between the mounting portion 12b and the main body 11 will not be described herein.

In some embodiments, the mounting portion 12b is detachably connected to the main body 11.

Specifically, the bottom cover 12 further includes a fixing hole 12c provided on the mounting portion 12b, and the fastening member 13 passes through the fixing hole 12c on the mounting portion 12b so as to be fastened on the main body 11. The fixing hole 12c is a through hole penetrating the mounting portion 12b in a vertical direction. Specifically, the fixing hole 12c may be a smooth through hole (for example, in a case where the fastening member 13 is a rivet), a through hole with threads (for example, in a case where the fastening member 13 is a screw), or a through hole in other types (for example, a hexagonal hole, a square hole, a waist-shaped hole, etc.). The specific type of the fixing hole 12c is set according to the specific type and the specific arrangement method for the fastening member 13, and will not be repeated herein.

In some embodiments, the thickness of the cover portion 12a is equal to the thickness of the mounting portion 12b.

In a case where the cover portion 12a and the mounting portion 12b are integrally formed, the cover portion and the mounting portion may be integrally formed through the method described in the above description, such as pressure-casting integral forming, cold-pressing integral forming, hot-pressing integral forming, injection molding integral forming, etc., which will not be repeated herein. Since the thickness of the cover portion 12a is equal to the thickness of the mounting portion 12b, when being formed, the cover portion and the mounting portion can be rapidly machined through stamping, cutting, etc. on the basis of the same metal plate.

In this case, the thickness of the cover portion 12a is equal to the thickness of the mounting portion 12b, and stress is equal everywhere in a forming process, such that a forming rate of integral forming can be improved. Moreover, the bottom cover and the mounting portion can be rapidly machined through a simple method such as plate cutting, such that the structure of the bottom cover 12 is simpler, and machining is more convenient.

In some embodiments, with reference to FIG. 7, the cover portion 12a protrudes in a direction away from the accommodation chamber s relative to the mounting portion 12b.

It can be seen from the above that the cover portion 12a delimits the accommodation chamber s, and the cover portion 12a protruding away from the accommodation chamber s means that the cover portion 12a protrudes away from the main body 11. That is, the cover portion 12a and the mounting portion 12b are arranged in a staggered manner in the vertical direction, and the cover portion 12a is located at a lowest portion of the bottom cover 12.

In a case where the cover portion 12a protrudes away from the accommodation chamber s relative to the mounting portion 12b, a certain redundant space can be formed between the cover portion 12a and the mounting portion 12b, and the redundant space can increase a distance between the cover portion 12a and the battery cell 20. When an external force acts on the cover portion 12a, the external force can be reduced through the redundant space, such that the external force acting on the battery cell 20 is reduced or avoided, and a damage to the battery cell 20 is reduced or avoided. Particularly, in a case where the battery pack 100 is mounted at a bottom of the vehicle 1000 and the bottom cover 12 is located at a lowest portion of the battery pack 100, stones, etc. on the ground are likely to fly to the bottom of the battery pack 100, that is, the bottom cover 12, in a driving process of the vehicle 1000, and hit the bottom cover 12. In this case, the redundant space can reduce an influence of an external force hitting on the battery cell 20. Moreover, the cover portion 12a protrudes relative to the mounting portion 12b, and the cover portion 12a of the bottom cover 12 can serve as a reinforcing structure of the bottom cover 12, so as to improve bending resistance of the bottom cover 12.

It can be understood that in an embodiment of the present application, the bottom cover 12 is located at the bottom of the enclosure 10 and is configured to delimit the accommodation chamber s.

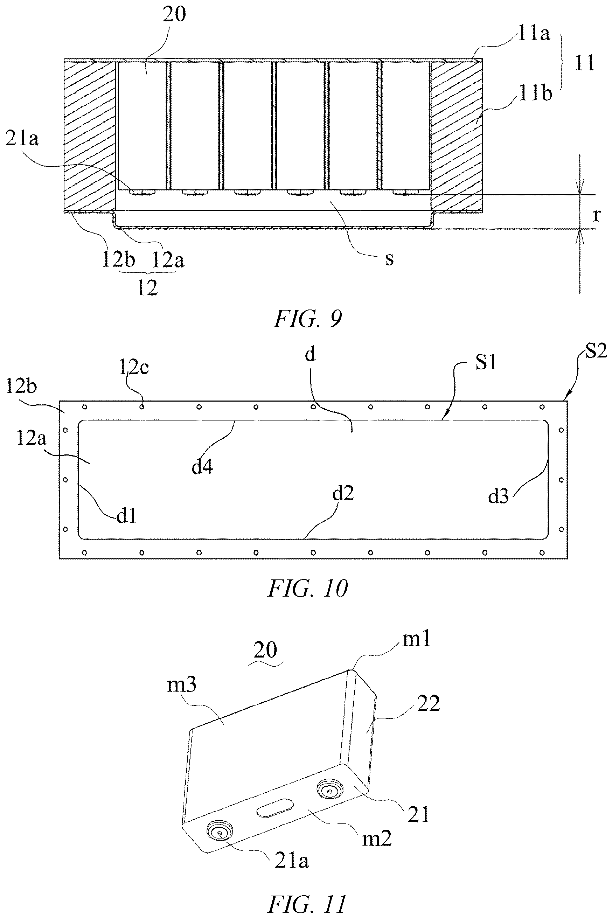

FIG. 9 is a sectional view of the battery pack 100 shown in FIG. 4. In some embodiments, with reference to FIG. 9, the bottom cover 12 and the battery cell 20 are spaced apart.

The bottom cover 12 and the battery cell 20 being spaced apart means that a set interval r is maintained between the bottom cover 12 and the battery cell 20 in the vertical direction. Under the action of the set interval r, a buffer space is formed between the bottom cover 12 and the battery cell 20 such that the external force acting on the bottom cover 12 can be prevented from being transmitted to the battery cell 20, and the battery cell 20 can be prevented from being damaged. Especially in a case where the battery pack 100 is mounted at a bottom of a vehicle 1000 and the bottom cover 12 is located at a lowest portion of the battery pack 100, stones, etc. on the ground are likely to fly to the bottom of the battery pack 100 to hit the bottom cover 12 in a driving process of the vehicle 1000. In this case, the buffer space can interrupt transmission of the external force to the battery cell 20, and the battery cell 20 will not be affected.

The bottom cover 12 and the battery cell 20 may be spaced apart through a method as follows: a redundant space is formed between the protruding cover portion 12a and the mounting portion 12b in the above embodiment, or a set distance is maintained between one end of the battery cell 20 located in the main body 11 and facing the bottom cover 12 and one end of the main body 11 facing the bottom cover 12. That is, the battery cell 20 is only located within a partial range of the accommodation chamber s delimited by the main body 11, but not within a range of the accommodation chamber s delimited by the bottom cover 12. In this way, the set interval r is maintained between the battery cell 20 and the bottom cover 12, such that a buffer space is formed.

Understandably, in a case where the battery pack 100 includes a plurality of battery cells 20, all of the battery cells 20 are spaced apart from the bottom cover 12. Further, in order to unify sizes of the battery cells 20, a distance between each battery cell 20 and the bottom cover 12 is equal.

In some embodiments, with reference to FIGS. 5 and 6, the bottom cover 12 has a feature surface d facing the accommodation chamber s, and the feature surface d is configured as a flat surface.

The feature surface d faces accommodation chamber s indicates that the feature surface d is an inner surface of the bottom cover 12 capable of delimiting the accommodation chamber s. The feature surface d being configured as a flat surface means that in an arrangement direction of the main body 11 and the bottom cover 12, the feature surface d is a flat surface perpendicular to this arrangement direction. In actual situations, in a case where the main body 11 and the bottom cover 12 are arranged in a vertical direction, the feature surface d of the bottom cover 12 is a flat surface parallel to a horizontal plane. In a case where the main body 11 and the bottom cover 12 are arranged in a horizontal direction, the feature surface d of the bottom cover 12 is a flat surface parallel to a vertical plane.

In a case where the feature surface d is a flat surface, a relatively equal distance (the distance may be zero) may be maintained between the feature surface d and each battery cell 20 accommodated in the accommodation chamber s. In a case where a relatively equal distance is maintained between the feature surface d and the battery cell 20, the accommodation chamber s can accommodate more battery cells 20, that is, a space utilization rate of the accommodation chamber s is higher, the battery pack 100 can have higher energy density, and the range of the battery pack 100 is higher.

Understandably, in a case where the bottom cover 12 is provided with the above cover portion 12a and the above mounting portion 12b, the feature surface d may be configured and formed by the inner surface of the cover portion 12a facing the accommodation chamber s. Further understandably, in a case where the bottom cover 12 and the battery cell 20 are spaced apart, the feature surface d and the battery cell 20 are spaced apart.

In some embodiments, an outer surface of the cover portion 12a facing away from the accommodation chamber s is parallel to the feature surface d.

The outer surface of the cover portion 12a facing away from the accommodation chamber s face away from the feature surface d in the vertical direction. The outer surface of the cover portion 12a is configured to be in contact with an atmospheric environment, and bears hit of an external force. In a case where the outer surface of the cover portion 12a is a flat surface flush with the feature surface d, especially in a case where the bottom cover 12 and the main body 11 are arranged at the bottom of the vehicle 1000 in the vertical direction and the bottom cover 12 is located at the lowest portion of the battery pack 100, the outer surface of the cover portion 12a being a flat surface can greatly reduce wind resistance generated by the battery pack 100, and is conducive to reduction of driving resistance of the vehicle 1000 and driving energy consumption of the vehicle 1000 and improvement of the range of the battery pack 100.

FIG. 10 is a schematic diagram of an orthographic projection of the bottom cover 12 shown in FIG. 6 in a vertical direction. S1 represents a projected area of the feature surface d, and S2 represents a projected area of the bottom cover 12.

In some embodiments, in the vertical direction, area S1 of an orthographic projection of the feature surface d and area S2 of an orthographic projection of the bottom cover 12 satisfy: S1/S2 ≥ 0.2. Further, S1/S2 ≥ 0.5.

In an embodiment shown in FIG. 10, in an orthographic projection in the vertical direction, the feature surface d is formed by connecting a first feature edge d1, a second feature edge d2, a third feature edge d3 and a fourth feature edge d4 end to end, and area S1 of the orthographic projection of the feature surface d is an area of a region delimited by the first feature edge d1, the second feature edge d2, the third feature edge d3 and the fourth feature edge d4. Area S2 of the orthographic projection of the bottom cover 12 is an area of a region delimited by an edge of the bottom cover 12.

Specifically, a ratio of area S1 of the orthographic projection of the feature surface d to area S2 of the orthographic projection of the bottom cover 12 may be 0.3, 0.4, 0.5, 0.6, 0.7, 0.8, 0.9, or 1.

**Table 2 Influence of ratio of area S1 to area S2 on the range of battery pack 100**

| No. | S1/mm² | S2/mm² | S1/S2 | Test Result |
|---|---|---|---|---|
| 1 | 0.3 × 10⁶ | 2.6 × 10⁶ | 0.115 | Poor |
| 2 | 0.52 × 10⁶ | 2.6 × 10⁶ | 0.2 | Moderate |
| 3 | 0.94 × 10⁶ | 2.6 × 10⁶ | 0.362 | Moderate |
| 4 | 1.3 × 10⁶ | 2.6 × 10⁶ | 0.5 | Good |
| 5 | 1.5 × 10⁶ | 2.6 × 10⁶ | 0.577 | Good |
| 6 | 1.8 × 10⁶ | 2.6 × 10⁶ | 0.692 | Good |
| 7 | 2.2 × 10⁶ | 2.6 × 10⁶ | 0.846 | Excellent |
| 8 | 2.4 × 10⁶ | 2.6 × 10⁶ | 0.923 | Excellent |
| 9 | 2.6 × 10⁶ | 2.6 × 10⁶ | 1 | Excellent |

Table 2 shows influences of a plurality of groups of ratios of areas S1 of orthographic projections of feature surfaces d to areas S2 of orthographic projections of bottom covers 12 on the range of a battery pack 100 in a case where tests are carried out according to the New European Driving Cycle (NEDC) standard. In a case where S1/S2 is less than 0.2, the range of the battery pack 100 is relatively poor. The reason is that in a case where the feature surface d is relatively small, a space utilization rate of the accommodation chamber s is relatively low, the number of battery cells 20 accommodated in the battery pack 100 is relatively small, and energy density of the battery pack 100 is relatively low, resulting in relatively short range of the battery pack 100 and a relatively poor test result. In a case where S1/S2 reaches 0.2 or above (especially in a case where S1/S2 reaches 0.5 or above), the greater the ratio, the better the range of the battery pack 100. The reason is that the larger the feature surface d, the higher the space utilization rate of the accommodation chamber s, and the higher the energy density of the battery pack 100. Therefore, the range of the battery pack 100 is increasingly high and the test result is increasingly desirable.

Since the feature surface d is a flat surface, the greater the area of the bottom cover 12 occupied by the feature surface d, the less the area of the inner surface of the bottom cover 12 that is recessed or protrudes relative to the feature surface d. The inner surface recessed relative to the feature surface d may make part of the space in the accommodation chamber s irregular, such that the battery cell 20 cannot be mounted, resulting in a low space utilization rate of the accommodation chamber s. Part of the space of the accommodation chamber s formed by the inner surface protruding relative to the feature surface d may be also irregular and cannot accommodate the battery cell 20, resulting in a low space utilization rate of the accommodation chamber s. In a case where the space utilization rate of the accommodation chamber s is low, a size occupied by the battery cell 20 per unit space in the battery pack 100 is small, and energy density of the battery pack 100 is low. Therefore, the greater the area of the bottom cover 12 occupied by the feature surface d, the greater the space utilization rate of the battery pack 100, the higher the energy density of the battery pack 100, and the better the range of the battery pack 100.

In some embodiments, with reference to FIG. 10, in the vertical direction, an orthographic projection of the feature surface d is in a shape of a rectangle.

As shown in FIG. 10, the rectangular feature surface d is a region delimited by a first feature edge d1, a second feature edge d2, a third feature edge d3 and a fourth feature edge d4. In the battery pack 100, the plurality of battery cells 20 are typically assembled to form a rectangular structure, and the feature surface d is configured to be in a shape of a rectangle so as to be adapted to an overall structure formed by the battery cells 20 in the battery pack 100, which is conducive to arrangement of more battery cells 20 in the accommodation chamber s, and improvement of the energy density of the battery pack 100.

Certainly, in other embodiments, in the vertical direction, the orthographic projection of the feature surface d may also be in other shapes, such as a circle, a polygon, an ellipse, and other irregular shapes.

In an embodiment of the present application, the main body 11 includes a bearing member 11a.

The bearing member 11a may be a component of the main body 11 configured to delimit the accommodation chamber s (for example, the bearing member 11a is the top cover or frame mentioned above), or may be a component not configured to delimit the accommodation chamber s but located in the accommodation chamber s (for example, the bearing member 11a is the supporting plate mentioned above), which is not specifically limited. In a case where the bearing member 11a is configured to delimit the accommodation chamber s, the bearing member 11a may be a component of the main body 11 directly connected to the bottom cover 12 (such as the frame mentioned above), or may be a component not connected to the bottom cover 12 (such as the top cover mentioned above).

In some embodiments, the battery cell 20 is arranged on a surface of the bearing member 11a.

In this case, the bearing member 11a is a component capable of bearing a weight of the battery cell 20, and may be a bearing plate, a bearing rod, a bearing block, a bearing sheet, a bearing frame, a bearing rope, etc., which is not specifically limited. Specifically, the battery cell 20 may be supported on the bearing member 11a. In this case, the battery cell 20 may be arranged above the bearing member 11a. Specifically, the battery cell 20 may be hung from the bearing member 11a. In this case, the battery cell 20 may be hung from a wall surface of the bearing member 11a parallel to a gravity direction of the battery cell 20.

The battery cell 20 may be arranged above the bearing member 11a (for example, the bearing member 11a serves as a supporting plate located in the accommodation chamber s), the battery cell 20 may be arranged below the bearing member 11a (for example, the bearing member 11a serves as a top cover configured to delimit the accommodation chamber s), and the battery cell 20 may be arranged on a side of the bearing member 11a (for example, the bearing member 11a serves as a frame configured to delimit the accommodation chamber s).

In some embodiments, the battery cell 20 is bonded to the bearing member 11a.

Specifically, the battery cell 20 may be bonded to the bearing member 11a by means of an adhesive such as an epoxy resin adhesive, an acrylate adhesive, etc., which is not specifically limited. In this case, the battery cell 20 is bonded to the bearing member 11a, such that connection is convenient, and the structure of the battery pack 100 can be simplified.

In some embodiments, the battery cell 20 is arranged on the surface of the bearing member 11a, and minimum thickness H of the bearing member 11a and weight M of the battery pack 100 satisfy: 0.0002 mm/kg < H/M ≤ 0.2 mm/kg.

The thickness of the bearing member 11a refers to a distance between a surface on one side of the bearing member 11a on which the battery cell 20 is arranged and a surface on the other side thereof facing away from the above surface. In a case where the battery cell 20 is arranged on the surface of the bearing member 11a in the vertical direction, minimum thickness H of the bearing member 11a refers to a thickness of a portion where a distance between surfaces on two sides of the bearing member 11a in the vertical direction is the smallest. In a case where the battery cell 20 is arranged on the surface of the bearing member 11a in a horizontal direction, the thickness of the bearing member 11a refers to a thickness of a portion where a distance between surfaces on two sides of the bearing member 11a in the horizontal direction is the smallest.

The weight of the battery pack 100 includes weights of the main body 11, the bottom cover 12, the battery cell 20 and other components (such as a wire harness, a thermal management system, a power management system, etc.).

Specifically, a ratio of minimum thickness H of the bearing member 11a to weight M of the battery pack 100 may be designed as: 0.0003 mm/kg, 0.0005 mm/kg, 0.0008 mm/kg, 0.001 mm/kg, 0.003 mm/kg, 0.005 mm/kg, 0.008 mm/kg, 0.01 mm/kg, 0.03 mm/kg, 0.05 mm/kg, 0.06 mm/kg, 0.08 mm/kg, 0.1 mm/kg, 0.12 mm/kg, 0.15 mm/kg, 0.16 mm/kg, 0.19 mm/kg, or 0.02 mm/kg.

**Table 3 Influence of ratio of minimum thickness H of bearing member 11a to weight M of battery pack 100 on safety performance of battery pack 100**

| No. | H (mm) | M (Kg) | H/M (mm/Kg) | Test Result |
|---|---|---|---|---|
| 1 | 0.1 | 1000 | 0.0001 | Caught fire, exploded |
| 2 | 0.2 | 1000 | 0.0002 | Caught fire, exploded |
| 3 | 0.6 | 600 | 0.001 | Did not catch fire, did not explode |
| 4 | 1.5 | 500 | 0.003 | Did not catch fire, did not explode |
| 5 | 2.5 | 500 | 0.005 | Did not catch fire, did not explode |
| 6 | 4 | 500 | 0.008 | Did not catch fire, did not explode |
| 7 | 3 | 300 | 0.01 | Did not catch fire, did not explode |
| 8 | 9 | 300 | 0.03 | Did not catch fire, did not explode |
| 9 | 10 | 200 | 0.05 | Did not catch fire, did not explode |
| 10 | 12 | 200 | 0.06 | Did not catch fire, did not explode |
| 11 | 16 | 200 | 0.08 | Did not catch fire, did not explode |
| 12 | 20 | 200 | 0.1 | Did not catch fire, did not explode |
| 13 | 30 | 200 | 0.15 | Did not catch fire, did not explode |
| 14 | 40 | 200 | 0.02 | Did not catch fire, did not explode |

Table 3 shows influences of a plurality of groups of ratios of minimum thicknesses H of bearing members 11a to weights M of battery packs 100 on safety performance of the battery packs 100 in a case where tests are carried out according to the standard of GB 3 8031-2020 Electric vehicles traction battery safety requirements. It can be seen from Table 3 that in a case where H/M does not exceed 0.0002 mm/Kg, the battery pack 100 may catch fire and explode. The reason is that structural strength of the battery pack 100 does not satisfy requirements. In a case where H/M exceeds 0.0002 mm/Kg, the battery pack 100 does not catch fire or explode. However, in a case where H/M is too large (for example, more than 0.1), since the battery pack 100 has a small weight, and the bearing plate has a large thickness, a ratio of the battery cell 20 in a unit size of the battery pack 100 is relatively low, a space utilization rate is relatively low, energy density of the battery pack 100 is too low, and use cost of the battery pack 100 is relatively high. Further, in a case where 0.0005 mm/Kg ≤ H/M ≤ 0.1 mm/Kg, structural strength of the battery pack 100 satisfies requirements, energy density of the battery pack 100 is relatively high, the battery pack 100 has longer range, and the battery pack will not catch fire or explode.

In some embodiments, minimum thickness H of the bearing member 11a satisfies: 0.2 mm < H < 20 mm.

Specifically, minimum thickness H of the bearing member 11a may be: 0.3 mm, 0.5 mm, 0.8 mm, 0.9 mm, 1.0 mm, 1.2 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 9 mm, 10 mm, 12 mm, 15 mm, 16 mm, 18 mm, or 19 mm. Further, in a case where 0.5 mm ≤ H ≤ 10 mm, the bearing member 11a has relatively desirable structural strength, overall strength of the battery pack 100 is moderate, and the battery pack 100 is not likely to catch fire and explode. Moreover, the bearing member 11a occupies a small volume of the entire battery pack 100, such that a space utilization rate of the battery pack 100 is relatively high, and energy density of the battery pack 100 is relatively high.

In some embodiments, with reference to FIGS. 3 and 4, the battery cell 20 is hung from the bearing member 11a.

The battery cell 20 being hung from the bearing member 11a means that the battery cell 20 is arranged below the bearing member 11a in a vertical direction, and the weight of the battery cell 20 is borne by the bearing member 11a. The battery cell 20 may be hung from the bearing member 11a through a method as follows: the battery cell 20 is directly bonded to a lower surface of the bearing member 11a, the battery cell 20 is connected to the bearing member 11a by means of a fastening member 13 and is located below the bearing member 11a, the battery cell 20 is hung from the bearing member 11a by means of a hook, etc. and is located below the bearing member 11a, etc.

In this case, the battery cell 20 is hung from a lower portion of the bearing member 11a, and the bottom cover 12 is located at the bottom of the enclosure 10. When an interior of the battery pack 100 is maintained, the bottom cover 12 can be detached to expose the battery cell 20 without detaching the bearing member 11a such that the battery pack 100 can be more conveniently maintained. Moreover, when the battery pack 100 is maintained, the battery cell 20 may be assembled on or disassembled from the bearing member 11a at a lower portion. Especially in a case where the bearing member 11a serves as at least a part of a chassis of a vehicle 1000 and is subjected to a force, it is only required to disassemble or assemble the battery cell 20 at the lower portion of the bearing member 11a without disassembling the bearing member 11a such that the battery pack 100 can be conveniently maintained.

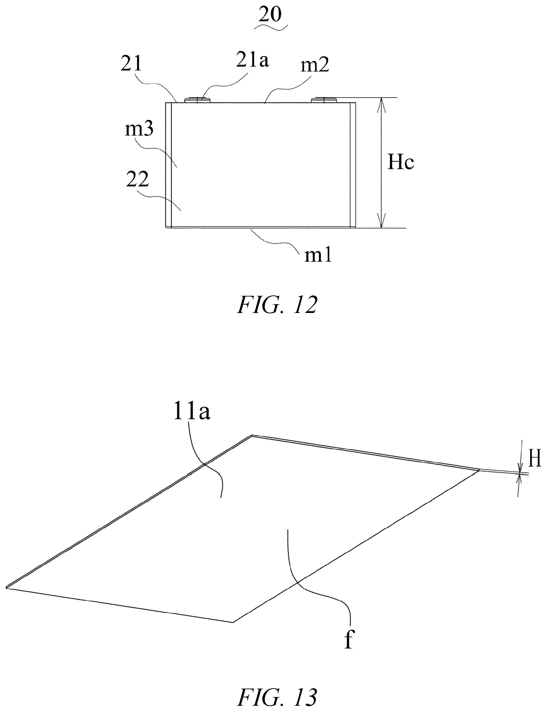

FIG. 11 is a schematic diagram of an outline of a battery cell 20 according to some embodiments of the present application. FIG. 12 is a front view of the battery cell 20 shown in FIG. 11.

In some embodiments, with reference to FIGS. 4 and 11, an outer surface of the battery cell 20 facing the bearing member 11a is a first outer surface m1, the battery cell 20 includes electrode terminals 21a, and the electrode terminals 21a are arranged on an outer surface of the battery cell 20 other than the first outer surface m1.

As introduced above, the electrode terminals 21a are components which are configured to be electrically connected to the electrode assembly 23 in the battery cell 20, so as to output or input electrical energy of the battery cell 20. The electrode terminals 21a at least partially protrude from the battery cell 20, so as to be electrically connected to the outside. Series connection and parallel connection between battery cells 20 are achieved through series connection and parallel connection between electrode terminals 21a. The electrode terminals 21a are electrically conductive so as to achieve electric transmission, and may be an aluminum electrode, a copper electrode, etc.

The electrode terminals 21a are arranged on an outer surface of the battery cell 20 other than the first outer surface m1. The first outer surface m1 faces the bearing member 11a, and is generally a smooth surface on which no structure such as the electrode terminals 21a and a liquid injection hole is arranged in a protruding or recessed manner. In a case where the battery cell 20 is hung from the bearing member 11a, the first outer surface m1 is an upward outer surface of the battery cell 20. Specifically, in an embodiment, the battery cell 20 includes the housing 22 and the end cover 21 described above, and the housing 22 and the end cover 21 form an internal environment of the battery cell 20 for accommodating the electrode assembly 23. The end cover 21 is located at one end of the housing 22, and the electrode terminals 21a are arranged on the end cover 21. In this case, any outer surface of the housing 22 may serve as the first outer surface m1 of the battery cell 20.

The electrode terminals 21a include a positive terminal and a negative terminal. The positive terminal is configured to be electrically connected to a positive plate in the electrode assembly 23, and the negative terminal is configured to be electrically connected to a negative plate in the electrode assembly 23. It should be noted that the positive terminal and the negative terminal may be arranged on the same outer surface of the battery cell 20 (for example, a square battery cell 20), or may be arranged on two different outer surfaces of the battery cell 20 (for example, a cylindrical battery cell 20) respectively. In a case where the positive terminal and the negative terminal are arranged on two different outer surfaces of the battery cell 20, the first outer surface m1 is a surface of the battery cell 20 different from the two outer surfaces.

Except for the battery cell 20, the battery pack 100 is generally provided with a sampling wire harness and a high-voltage wire harness that are electrically connected to each battery cell 20, a protective structure for protecting the battery cell 20, etc. In this case, the electrode terminals 21a are arranged on the other surface of the battery cell 20 other than the first outer surface m1. In a case where the sampling wire harness, the high-voltage harness, the protective structure, etc. are arranged on the electrode terminals 21a, without limitation of the bearing member 11a, components can be arranged through spaces between the battery cell 20 and other structures of the main body 11 other than the bearing member 11a (for example, through a space between the battery cell and the bottom cover and/or a space between the battery cell and the inner side surface of the main body). Thus, the components can be more conveniently arranged. Moreover, since the first outer surface m1 is a smooth surface, the first outer surface m1 may be attached to the bearing member 11a such that the battery cell 20 may be attached to the bearing member 11a. It is not required to reserve a space between the battery cell 20 and the bearing member 11a, which is conducive to improvement of the space utilization rate of the battery pack 100.

In some embodiments, with reference to FIGS. 11 and 12, the battery cell 20 is provided with a second outer surface m2 arranged facing away from first outer surface m1, and the electrode terminals 21a are arranged on the second outer surface m2.

The second outer surface m2 is an outer surface of the battery cell 20 arranged facing away from the first outer surface m1. In a case where the battery cell 20 is hung from the bearing member 11a, the second outer surface m2 is opposite the bottom cover 12. As described above, the battery cell 20 and the bottom cover 12 may be spaced apart. In this case, a buffer space is provided between the second outer surface m2 and the bottom cover 12, and the portions of the electrode terminals 21a extending out of the battery cell 20 are located in the buffer space, such that a wire harness and a connecting sheet that are connected to the electrode terminals 21a can be arranged in the buffer space. Moreover, as mentioned above, the buffer space can further prevent an external force hitting the bottom cover 12 from acting on the battery cell 20 such that the battery cell 20 will not be damaged. Therefore, the buffer space not only can interrupt an influence of the external force, but also can be used for a layout of the wire harness, etc., such that double benefits are achieved. In addition, space utilization rates of the buffer space and the battery pack 100 are also improved.

Certainly, in other embodiments, with reference to FIGS. 11 and 12, the electrode terminals 21a may also be arranged on a third outer surface intersecting the first outer surface m1 in the battery cell 20.

In some embodiments of the present application, with reference to FIGS. 4, 5 and 9, the bearing member 1 1a is located at a top of the enclosure 10 and is configured to delimit the accommodation chamber s. Since the bottom cover 12 is located at a bottom of the enclosure 10, the bearing member 11a is arranged opposite the bottom cover 12. The bearing member 11a serves as a structure on a top of the enclosure 10, and the enclosure 10 can be mounted to the mounting body by means of the bearing member 11a. In this case, the battery cell 20 arranged on the bearing member 11a can enhance strength of the bearing member 11a, and further improve stiffness of a top of the battery pack 100. In this way, an application scene of the battery pack 100 can be extended to a scene where the top is subjected to a force. For example, the battery pack is used as a part of the chassis of the vehicle 1000.

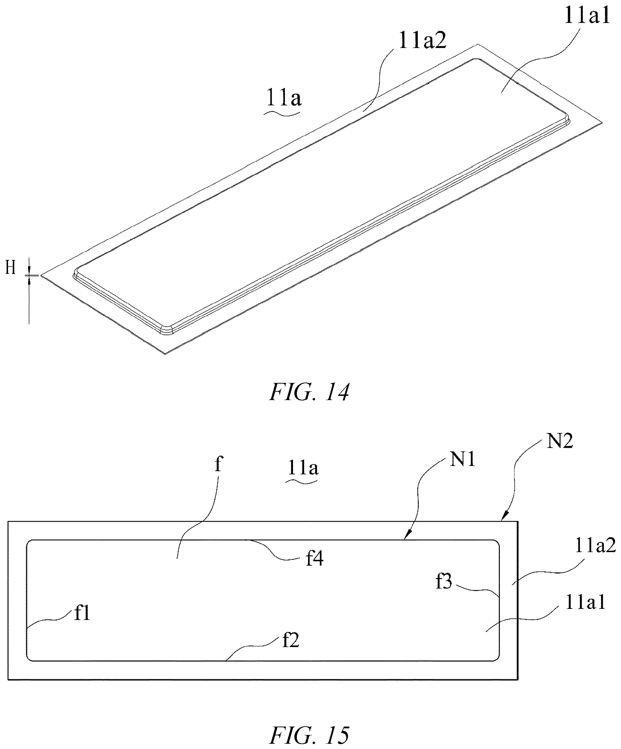

FIG. 13 is a schematic diagram of a bearing member 11a according to some embodiments of the present application. FIG. 14 is a schematic diagram of a bearing member 11a according to some other embodiments of the present application. FIG. 15 is a diagram of an orthographic projection of the bearing member 11a shown in FIG. 14 in a vertical direction.

In some embodiments, the bearing member 11a is provided with a bearing surface f facing the accommodation chamber s, and the bearing surface f is configured as a flat surface.

The bearing surface f is an inner surface of the bearing member 11a facing the accommodation chamber s, and is configured to delimit the accommodation chamber s. The bearing surface f being configured as a flat surface means that in an arrangement direction of the main body 11 and the bottom cover 12, the bearing surface f is a flat surface perpendicular to the arrangement direction. In actual situations, in a case where the main body 11 and the bottom cover 12 are arranged in a vertical direction, the bearing member 11a and the bottom cover 12 are arranged opposite each other in the vertical direction, and the bearing surface f of the bearing member 11a is a flat surface parallel to the horizontal plane. In a case where the main body 11 and the bottom cover 12 are arranged in a horizontal direction, the bearing member 11a and the bottom cover 12 are arranged opposite each other in the horizontal direction, and the bearing surface f of the bearing member 11a is a flat surface parallel to the vertical plane.

As shown in FIG. 13, the bearing member 11a may be the whole of the inner surface of the bearing member 11a facing the accommodation chamber s. In this case, the bearing member 11a may be in a flat-plate shape. As shown in FIGS. 14 and 15, the bearing member 11a may also be a part of an inner surface of the bearing member 11a facing the accommodation chamber s. In this case, the bearing surface f is only part of the inner surface of the bearing member 11a configured to delimit the accommodation chamber s.

In a case where the bearing surface f is a flat surface, a relatively equal distance (the distance may be zero) may be maintained between the bearing surface f and each battery cell 20 accommodated in the accommodation chamber s. In a case where a relatively equal distance is maintained between the bearing surface f and the battery cell 20, the accommodation chamber s can accommodate more battery cells 20, that is, a space utilization rate of the accommodation chamber s is higher, the battery pack 100 can have higher energy density, and the battery pack 100 has higher range.

In some embodiments, the battery cell 20 is arranged on the bearing surface f. The battery cell 20 is mounted to the bearing member 11a by means of the bearing surface f. The battery cell 20 may be bonded to the bearing surface f, may be fixedly connected to the bearing surface f by means of a fastening member 13, etc., or may be welded or snap-fitted to the bearing surface f, which is not specifically limited.

Since the bearing surface f is a flat surface, the bearing surface f may have a relatively large contact area with the battery cell 20 arranged on the bearing surface f, and the battery cell 20 can be more stably mounted. Moreover, in a case where the bearing surface f is a flat surface, compared with an uneven surface such as a curved surface, the bearing surface f may be connected to more battery cells 20. Thus, the number of battery cells 20 mounted in the battery pack 100 can be increased, and further a space utilization rate and energy density of the battery pack 100 can be improved.

Understandably, in a case where the battery cell 20 is hung from the bearing member 11a, the battery cell 20 is hung from the bearing surface f.

In some embodiments, in the vertical direction, area N1 of an orthographic projection of the bearing surface f and area N2 of an orthographic projection of the bearing member 11a satisfy: N1/N2 ≥ 0.2. Further, N1/N2 ≥ 0.5.

In the embodiment shown in FIG. 15, in the orthographic projection in the vertical direction, the bearing surface f is formed by connecting a first bearing edge f1, a second bearing edge f2, a third bearing edge f3 and a fourth bearing edge f4 end to end, and area N1 of the orthographic projection of the bearing surface f is an area of a region delimited by the first bearing edge f1, the second bearing edge f2, the third bearing edge f3 and the fourth bearing edge f4. Area N2 of the orthographic projection of the bearing member 11a is an area of a region delimited by an edge of the bearing member 11a.

Specifically, a ratio of area N1 of the orthographic projection of the bearing surface f to area N2 of the orthographic projection of the bearing member 11a may be 0.2, 0.3, 0.4, 0.5, 0.6, 0.7, 0.8, 0.9 or 1.

**Table 4 Influence of ratio of area N1 to area N2 on the range of battery pack 100**

| No. | N1 (mm²) | N2 (mm²) | N1/N2 | Test Result |
|---|---|---|---|---|
| 1 | 1.8 × 10⁵ | 2.16 × 10⁶ | 0.083 | Poor |
| 2 | 2.16 × 10⁵ | 2.16 × 10⁶ | 0.1 | Poor |
| 3 | 4.32 × 10⁵ | 2.16 × 10⁶ | 0.2 | Moderate |
| 4 | 8 × 10⁵ | 2.16 × 10⁶ | 0.37 | Moderate |
| 5 | 1.2 × 10⁶ | 2.16 × 10⁶ | 0.56 | Good |
| 6 | 1.7 × 10⁶ | 2.16 × 10⁶ | 0.787 | Excellent |
| 7 | 2.16 × 10⁶ | 2.16 × 10⁶ | 1 | Optimum |

Table 4 shows influences of a plurality of groups of ratios of areas N1 of orthographic projections of bearing surfaces f to area N2 of orthographic projections of bearing members 11a on the range of a battery pack 100 in a case where tests are carried out according to the NEDC standard. In a case where N1/N2 is less than 0.2, the range of the battery pack 100 is relatively poor. The reason is that in a case where the bearing surface f is relatively small, the number of battery cells 20 borne by the bearing member 11a is small, a space utilization rate of the accommodation chamber s is relatively low, and energy density of the battery pack 100 is relatively low, resulting in short range of the battery pack 100 and a poor test result. In a case where N1/N2 reaches 0.2 or above (especially in a case where N1/N2 reaches 0.5 or above), the greater the ratio, the better the range of the battery pack 100. The reason is that the larger the bearing surface f, the more the number of battery cells 20 borne by the bearing member 11a, the higher the space utilization rate of the accommodation chamber s, and the higher the energy density of the battery pack 100. Thus, the range of the battery pack 100 is increasingly high, and the test structure is increasingly desirable. In a case where the bearing member 11a is of a flat-plate structure as shown in FIG. 13, area N1 of the orthographic projection of the bearing surface f is equal to area N2 of the orthographic projection of the bearing member 11a, and the range of the battery pack 100 is the best.

In some embodiments, in the vertical direction, the orthographic projection of the bearing surface f is in a shape of a rectangle.

As shown in FIG. 15, the rectangular bearing surface f is a region delimited by a first bearing edge f1, a second bearing edge f2, a third bearing edge f3 and a fourth bearing edge f4. In the battery pack 100, the plurality of battery cells 20 are typically assembled to form a rectangular structure, and the bearing surface f is configured to be in a shape of a rectangle so as to be adapted to an overall structure formed by a battery, which is conducive to arrangement of more battery cells 20 in the accommodation chamber s and improvement of the energy density of the battery pack 100.

Certainly, in other embodiments, in the vertical direction, the orthographic projection of the bearing surface f may also be in other shapes, such as a circle, a polygon, an ellipse, and other irregular shapes.

In some embodiments, with reference to FIG. 14, the bearing member 11a is provided with a bearing portion 11a1 and a connecting portion 11a2, the connecting portion 11a2 encloses and is connected to an edge of the bearing portion 11a1, the bearing portion 11a1 is configured to delimit the accommodation chamber s, and the connecting portion 11a2 is connected to a part of the enclosure 10 other than the bearing member 11a.

The bearing portion 11a1 is configured to delimit the accommodation chamber s, and the connecting portion 11a2 is configured to be connected to the part of the enclosure 10 other than the bearing member 11a without participating in delimitation of the accommodation chamber s. The bearing portion 11a1 may be a plate-shaped member, a block-shaped member, a flat-plate-shaped member, or a bent-plate-shaped member, which is not specifically limited. It can be seen from FIG. 14, the connecting portion 11a2 enclosing the edge of the bearing portion 11a1 means that the connecting portion 11a2 is continuously connected along the edge of the bearing portion 11a1 in an end-to-end closed connection structure. Understandably, in a projection in the vertical direction, the connecting portion 11a2 has a certain width such that such that an appropriate contact area can be formed between the connecting portion and other structures of the enclosure 10 other than the bearing member 11a. Thus, the connecting portion 11a2 can be more conveniently mounted and connected to other structures of the enclosure 10 other than the bearing member 11a.

The bearing portion 11a1 and the connecting portion 11a2 may be integrally formed. In a case where the bearing member 11a is made of metal (such as aluminum, iron, stainless steel, etc.), the bearing portion 11a1 and the connecting portion 11a2 may be integrally formed through pressure casting, forging, hot pressing, cold pressing, etc. In a case where the bearing member 11a is made of plastic (such as PP, PE, ABS, etc.), the bearing portion 11a1 and the connecting portion 11a2 may be integrally formed through injection molding. The bearing portion 11a1 and the connecting portion 11a2 may be separately formed and then connected together. In a case where the bearing portion 11a1 and the connecting portion 11a2 are made of metal, the bearing portion 11a1 and the connecting portion 11a2 may be welded or bonded together. In a case where the bearing portion 11a1 and the connecting portion 11a2 are made of plastic, the cover portion 12a and the mounting portion 12b may be bonded together. Certainly, the bearing portion 11a1 and the connecting portion 11a2 may be fixedly connected together through other methods such as snap-fitting, riveting, etc.

Specifically, the connecting portion 11a2 may be connected to part of the main body 11 other than the bearing member 11a in an integrally formed or fixedly connected manner. In a case where the connecting portion 11a2 and the part of the main body 11 other than the bearing member 11a in an integrally formed manner, that is, the main body 11 is an integrally formed product, the connecting portion and the main body can be integrally formed through pressure casting, forging, hot pressing, cold pressing, injection molding, etc. The connecting portion 1 1 a2 may be fixedly connected to the part of the main body 11 other than the bearing member 11a through fastening connection by means of a fastening member 13, snap-fitting by means of a snap-fit structure, etc., which is not specifically limited.

The bearing portion 11a1 and the connecting portion 11a2 may be located in the same plane. Specifically, optionally, two surfaces of the bearing portion 11a1 and the connecting portion 11a2 facing the bottom cover 12 are in the same plane, and/or two surfaces of the bearing portion 11a1 and the connecting portion 11a2 facing away from the bottom cover 12 are in the same plane. In a case where the two surfaces of the bearing portion 11a1 and the connecting portion 11a2 facing the bottom cover 12 are in the same plane, and the two surfaces of the bearing portion and the connecting portion facing away from the bottom cover 12 are in the same plane, the bearing portion 11a1 and the connecting portion 11a2 may form a flat-plate-shaped bearing member 11a (as shown in FIG. 13).

The bearing portion 11a1 and the connecting portion 11a2 may not be located in the same plane. Specifically, the bearing portion 11a1 protrudes away from the accommodation chamber s relative to the connecting portion 11a2, or the bearing portion 11a1 is recessed towards the accommodation chamber s relative to the connecting portion 11a2, which is not specifically limited. The thickness of the bearing portion 11a1 and the thickness of the connecting portion 11a2 may be equal or different from each other, and are not specifically limited.

In this case, the bearing member 11a delimits the accommodation chamber s by means of the bearing portion 11a1, and is connected to structures of the main body 11 other than the bearing member 11a by means of the connecting portion 11a2. Thus, the structure is clear.

Understandably, in a case where the bearing member 11a includes the above bearing portion 11a1 and the above connecting portion 11a2, the battery cell 20 is arranged at the bearing portion 11a1.

Understandably, in a case where the bearing member 11a includes the above bearing portion 11a1 and the above connecting portion 11a2, the inner surface of the bearing portion 11a1 facing the accommodation chamber s is configured to form the bearing surface f.

In some embodiments, the bearing portion 11a1 protrudes in a direction away from the accommodation chamber s relative to the connecting portion 11a2.

It can be seen from the above that the bearing portion 11a1 delimits the accommodation chamber s, and the bearing portion 11a1 protruding away from the accommodation chamber s means that the bearing portion 11a1 and the connecting portion 11a2 are arranged in a staggered manner in the vertical direction. The bearing portion 11a1 is located at a highest portion of the bearing member 11a. In this case, a space as a part of the accommodation chamber s may be formed between the bearing portion 11a1 and the connecting portion 11a2, and the space may accommodate the battery cell 20.

In a case where the bearing portion 11a1 protrudes in a direction away from the accommodation chamber s relative to the connecting portion 11a2, the bearing member 11a1 may serve as a reinforcing structure of the bearing member 11a, so as to improve bending resistance of the bearing member 11a.

In some embodiments, the thickness of the bearing portion 11a1 is equal to the thickness of the connecting portion 11a2.

In a case where the thickness of the bearing portion 11a1 is equal to the thickness of the connecting portion 11a2, the bearing portion 11a1 and the connecting portion 11a2 may be integrally formed by carrying out pressure casting, cold pressing and hot pressing on the same plate such that the bearing member 11a can be more conveniently formed. Moreover, the thickness of the bearing portion 11a1 is equal to the thickness of the connecting portion 11a2, and stress is equal everywhere in a forming process such that a forming rate of the bearing member 11a can be improved.

In some embodiments, an outer surface of the bearing portion 11a1 facing away from the accommodation chamber s is parallel to the bearing surface f.

The outer surface of the bearing portion 11a1 facing away from the accommodation chamber s is arranged opposite the bearing surface f in the vertical direction. The outer surface of the bearing portion 11a1 can be in contact with the atmospheric environment. In a case where the battery pack 100 is mounted to the vehicle 1000, the bearing portion 11a1 of which an outer surface is a flat surface can reduce driving resistance of the vehicle 1000, reduce driving energy consumption of the vehicle 1000, and improve the range of the battery pack 100.

In some embodiments, with reference to FIGS. 3, 4 and 9, the main body 11 includes a frame 11b and a bearing member 11a, the frame 11b encloses a through cavity q that is open at two ends in a vertical direction, the bottom cover 12 and the bearing member 11a close two ends, facing away from each other, of the cavity q in the vertical direction respectively, and the bottom cover 12, the frame 11b and the bearing member 11a jointly enclose an accommodation chamber s.

The frame 11b encloses the through cavity q that is open at two ends in a vertical direction, the bearing member 11a closes the top of the cavity q, and the bottom cover 12 closes the bottom of the cavity q. That is, the bearing member 11a is located at the top of the enclosure 10 and is configured to delimit the accommodation chamber s, and the bottom cover 12 is located at the bottom of the enclosure 10 and is configured to delimit the accommodation chamber s. The frame 11b, the bearing member 11a and the bottom cover 12 enclose an accommodation chamber s. The frame 11b, the bearing member 11a and the bottom cover 12 may be made of the same material, such as an aluminum alloy, a copper alloy, steel, plastic, etc. Certainly, the frame 11b, the bearing member 11a and the bottom cover 12 may be made of different materials, which are not specifically limited. In an orthographic projection in the vertical direction, the frame 11b may be in a shape of a rectangle, a circle, a polygon, etc., which is not specifically limited.

In a case where the bearing member 11a includes the bearing portion 11a1 and the connecting portion 11a2, the bearing member 11a is connected to the frame 1 1b by means of the connecting portion 11a2. In a case where the bottom cover 12 includes the above cover portion 12a and the above mounting portion 12b, the bottom cover 12 is connected to the frame 11b by means of the mounting portion 12b.

In this case, by taking the frame 1 1b as a foundation, the bearing member 11a and the bottom cover 12 are connected to two ends of the frame 11b in the vertical direction respectively, such that the accommodation chamber s of the battery pack 100 is formed. Thus, the structure of the enclosure 10 is relatively simple.

In some embodiments, the bearing member 11a and the frame 11b are fixedly connected or integrally formed. The bearing member 11a and the frame 11b may be integrally formed through injection molding, pressure casting, forging, cold pressing, hot pressing, etc. The bearing member 11a and the frame 11b may be fixedly connected through fastening connection by means of a fastening member 13, snap-fitting by means of a snap-fit structure, welding, bonding, hot melt connection, etc.

In a case where the bearing member 11a and the frame 11b are integrally formed, a main body 11 is integrally formed, and the enclosure 10 can be assembled only by connecting the main body 11 to the bottom cover 12. Thus, the enclosure 10 can be conveniently assembled. In a case where the bearing member 11a and the frame 11b are fixedly connected, a forming process for the bearing member 11a and the frame 11b is relatively easy. Thus, process cost of the enclosure 10 can be reduced.

Understandably, in a case where the bearing member 11a is provided a bearing portion 11a1 and a connecting portion 11a2, the connecting portion 11a2 is connected to the frame 1 1b. In a case where the bottom cover 12 is provided with a cover portion 12a and a mounting portion 12b, the bottom cover is connected to the frame 11b by means of the mounting portion 12b.

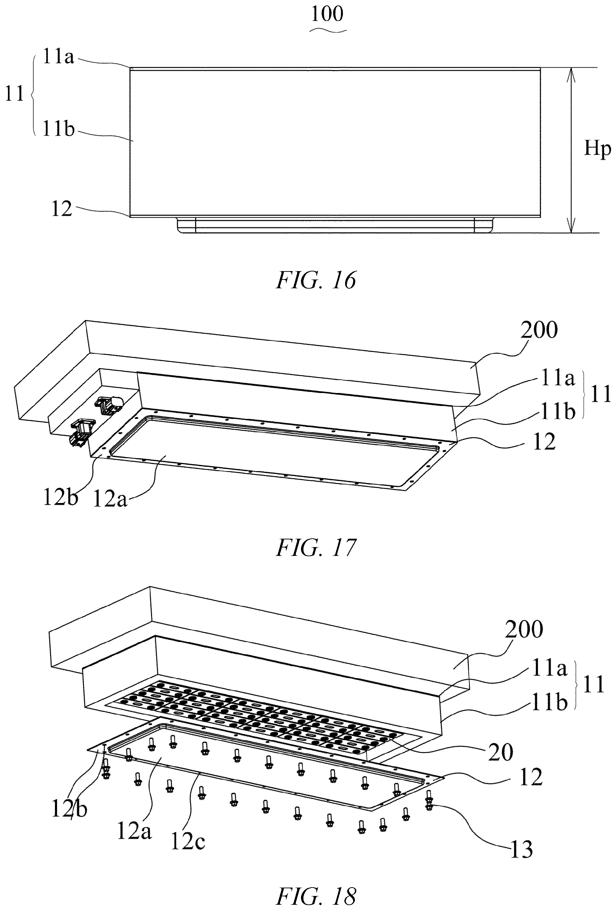

FIG. 16 is a front view of the battery pack 100 shown in FIG. 4. With reference to FIGS. 16 and 12, in some embodiments, in a vertical direction, a height Hc of the battery cell 20 and a height Hp of the battery pack 100 satisfy: 0.02 ≤ Hc/Hp ≤ 0.98.

The height Hc of the battery cell 20 refers to a maximum length of the battery cell 20 in the vertical direction in a case where the main body 11 and the bottom cover 12 are arranged in the vertical direction. The battery cell 20 shown in FIG. 12 is taken as an example, and in a case where the first outer surface m1 of the battery cell 20 is arranged opposite the outer surface on which the electrode terminals 21a are located, a maximum length of the battery cell 20 refers to a distance between the electrode terminals 21a and the first outer surface m1. Certainly, in a case where the first outer surface m1 of the battery cell 20 is adjacent to the outer surface on which the electrode terminals 21a are located, the height Hc of the battery cell 20 refers to a distance between the first outer surface m1 of the battery cell 20 and the outer surface arranged facing away therefrom .

Height Hp of the battery pack 100 refers to a maximum length of the battery pack 100 in the vertical direction in a case where the main body 11 and the bottom cover 12 are arranged in the vertical direction.

Specifically, a ratio of the height Hc of the battery cell 20 to the height Hp of the battery pack 100 may be 0.02, 0.03, 0.05, 0.08, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, or 0.98.

**Table 5 Influence of ratio of the height Hc of battery cell 20 to the height Hp of battery pack 100 on safety performance of battery pack 100**

| No. | Hc/mm | Hp/mm | Hc/Hp | Test Result |
|---|---|---|---|---|
| 1 | 248 | 252 | 0.984 | Caught fire, exploded |
| 2 | 138 | 150 | 0.92 | Did not catch fire, did not explode |
| 3 | 115 | 135 | 0.85 | Did not catch fire, did not explode |
| 4 | 90 | 120 | 0.75 | Did not catch fire, did not explode |
| 5 | 78 | 120 | 0.65 | Did not catch fire, did not explode |
| 6 | 110 | 200 | 0.55 | Did not catch fire, did not explode |
| 7 | 60 | 200 | 0.3 | Did not catch fire, did not explode |
| 8 | 60 | 600 | 0.1 | Did not catch fire, did not explode |
| 9 | 50 | 1000 | 0.05 | Did not catch fire, did not explode |

Table 5 shows influences of a plurality of groups of ratios of the height Hc of battery cells 20 to the heights Hp of battery packs 100 on safety performance of the battery packs 100 in a case where tests are carried out according to the standard of GB 38031-2020 *Electric Vehicles Traction Battery Safety Requirements.* It can be seen from Table 5 that in a case where Hc/Hp exceeds 0.98, the structure of the enclosure 10 occupies a small height of the battery pack 100, and strength of the enclosure 10 cannot satisfy requirements such that the battery pack may catch fire and explode. In a case where 0.02 ≤ Hc/Hp, structural strength of the enclosure 10 can satisfy requirements such that the battery pack will not catch fire or explode. In a case where Hc/Hp is less than 0.2, structural strength of the enclosure 10 can satisfy requirements, but a space utilization rate of the battery pack 100 is low, and energy density is too low.

Further, in a case where 0.5 ≤ Hc/Hp < 0.94, strength of the battery pack 100 satisfies requirements such that the battery pack will not catch fire or explode. Moreover, a space utilization rate of the battery pack 100 is relatively high, and energy density of the battery pack 100 is relatively high.

According to some embodiments of the present application, the battery pack 100 includes a battery cell 20 and an enclosure 10, the enclosure 10 encloses an accommodation chamber s, the enclosure 10 includes a bearing member 11a located on the top of the enclosure and configured to delimit the accommodation chamber s, and the battery cell 20 is accommodated in the accommodation chamber s and hung from the bearing member 11a. In this case, when the battery pack 100 is maintained, the battery cell 20 may be assembled on or disassembled from the bearing member 11a at a lower portion. Especially in a case where the bearing member 11a serves as at least a part of a chassis of a vehicle 1000 and is subjected to a force, it is only required to disassemble or assemble the battery cell 20 at the lower portion of the bearing member 11a without disassembling the bearing member 11a such that the battery pack 100 can be conveniently maintained. Moreover, the battery cell 20 hung from the bearing member 11a can enhance strength of the bearing member 11a, and further improve stiffness of a top of the battery pack 100.

In another aspect, the present application further provides a power consuming device. The power consuming device includes the battery pack 100 provided in any one of the above embodiments, and the battery pack 100 is configured to provide electrical energy for the power consuming device. For the introduction of the power consuming device, reference is made to the above description, which will not be repeated herein.

Since the power consuming device includes the above battery pack 100, the power consuming device has all the beneficial effects in the above embodiments, which will not be repeated herein.

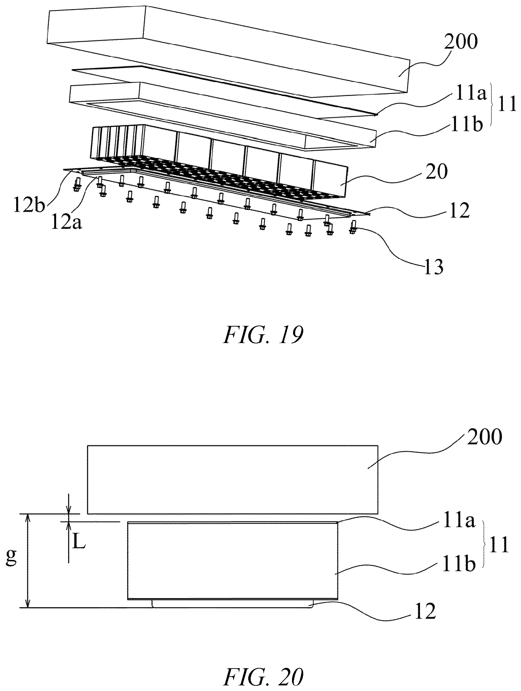

FIG. 17 is a schematic diagram of application of a battery pack 100 to a bodywork 200 according to some embodiments of the present application. FIG. 18 is a first exploded state diagram of the structure shown in FIG. 17. FIG. 19 is a second exploded state diagram of the structure shown in FIG. 17.

In some embodiments, with reference to FIGS. 17-19, the power consuming device includes a vehicle 1000, and the battery pack 100 is arranged at the bottom of a bodywork 200 of the vehicle 1000. For the description of the vehicle 1000, reference is made to the above description, which will not be repeated herein.

The bodywork 200 of the vehicle 1000 refers to a part of the vehicle 1000 configured to carry people and cargo, and includes a driver cabin, a passenger compartment, an engine compartment, a luggage compartment, etc. The bodywork 200 generally includes a housing 22 of the bodywork 200, and a door, a window, a trim, a seat, an air conditioner, etc. arranged on the housing 22 of the bodywork 200. The housing 22 of the bodywork 200 generally refers to a structure composed of main load-bearing components such as a longitudinal beam, a transverse beam, a chassis and a pillar of the vehicle 1000 and sheet metal parts connected thereto. In an embodiment of the present application, the battery pack 100 being arranged at the bottom of the bodywork 200 mainly means that the battery pack 100 is arranged at the bottom of the housing 22 of the bodywork 200.

In this case, the battery pack 100 is arranged at the bottom of the bodywork 200, and will not occupy a space in the bodywork 200, which is conducive to reduction of a size and a weight of the bodywork 200.

FIG. 20 is a schematic diagram of a mounting relation between a battery pack 100 and a bodywork 200 according to some embodiments of the present application. In some embodiments, with reference to FIG. 20, the main bodywork 11 includes a bearing member 11a located at the top of the enclosure 10, the bearing member 11a is configured to delimit the accommodation chamber s, and in the vertical direction, distance L between the bearing member 11a and the bodywork 200 satisfies: L ≥ 0.

Since the battery pack 100 is located at the bottom of the bodywork 200, and the bearing member 1 1a is located at the top of the enclosure 10, the bearing member 1 1a in the battery pack 100 is closest to the bodywork 200. Distance L between the bearing member 11a and the bodywork 200 refers to a distance between a highest portion of the bearing member 11a and the bodywork 200 located above the bearing member in the vertical direction. In a case where the bearing member 11a includes the bearing portion 11a1 and the connecting portion 11a2, distance L between the bearing member 11a and the bodywork 200 is a distance between an outer surface of the bearing portion 11a1 facing away from the accommodation chamber s and the bodywork 200 located above the outer surface of the bearing portion.

In a case where distance L between the bearing member 11a and the bodywork 200 is equal to 0, the bearing member 11a is attached to the bodywork 200. In a case where distance L between the bearing member 11a and the bodywork 200 is greater than 0, the bearing member 11a is spaced apart from and is not attached to the bodywork 200. Understandably, in this case, the bottom cover 12 is located at the bottom of the bearing member 11a, and distance g between the bottom cover 12 and the bodywork 200 is greater than 0.

In a case where the battery pack 100 is arranged below the bodywork 200, a range of a distance between the bottom of the battery pack 100 and the bodywork 200 is a mounting space occupied by the battery pack 100. In a case where the bearing member 11a and the bodywork 200 are spaced, a certain waste space exists between the battery pack 100 and the bodywork 200. In a case where the bearing member 11a is attached to the bodywork 200, the waste space existing between the battery pack 100 and the bodywork 200 can be distributed to a range of the space of the battery pack 100. In this way, under the condition that the same space is occupied at a lower portion of the bodywork 200, the battery pack 100 is attached to the bodywork 200 so as to increase the size of the battery pack 100. Thus, power and energy density of the battery pack 100 can be increased.

In this case, in a case where distance L between the bearing member 11a and the bodywork 200 is equal to zero, the battery pack 100 can have a relatively large electric quantity and relatively high energy density, such that the range of the vehicle 1000 is long. In a case where distance L between the bearing member 11a and the bodywork 200 is greater than zero, the bearing member 11a can be relatively flexibly mounted.

In some embodiments, with reference to FIGS. 17-19, the main bodywork 11 includes a bearing member 11a located at the top of the enclosure 10, the bearing member 11a is configured to delimit the accommodation chamber s, and the battery pack 100 is mounted to the bodywork 200 by means of the bearing member 11a.

Since the battery pack 100 is located at the bottom of the bodywork 200, and the bearing member 11a is located at the top of the enclosure 10, the bearing member 11a in the battery pack 100 is closest to the bodywork 200, and the battery pack 100 is mounted to the bodywork 200 by means of the bearing member 11a. Specifically, the bearing member 11a may be fixed to the bodywork 200 by means of a fastening member 13 (such as a screw, a bolt, a rivet, etc.) or through welding, etc.

In a case where the battery cell 20 is arranged on the bearing member 11a, the structure formed by the battery cell 20 and the bearing member 11a is connected to the bodywork 200, such that top strength of the battery pack 100 can be improved, and further mounting strength of the battery pack 100 can be improved.

In some embodiments, the bearing member 11a is configured to form at least a part of a chassis of the bodywork 200.

The chassis, as a part of the bodywork 200 and a combination of a transmission system, a driving system, a steering system and a braking system, is configured to support and mount an engine of the vehicle 1000 and various components and assemblies thereof, form the overall shape of the vehicle 1000, bear the power of the engine, and ensure normal driving.

The chassis is located at the bottom of the bodywork 200, and the bearing member 11a directly serves as at least a part of the chassis. That is, the bearing member 11a is configured to form at least a part of the chassis of the bodywork 200. In this way, the bearing member 11a and the chassis of the bodywork 200 are integrated, such that a space occupied by a gap between a conventional chassis and the battery pack 100 can be distributed to the battery pack 100 to increase a space of the battery pack 100, which is conducive to an increase in energy density of the battery pack 100, which in turn can improve the range of the vehicle 1000.

According to some embodiments of the present application, with reference to FIGS. 17-19, a power consuming device includes a vehicle 1000, and a battery pack 100 is arranged at a bottom of the bodywork 200 of the vehicle 1000. The battery pack 100 includes an enclosure 10 and a battery cell 20, the enclosure 10 includes a bearing member 11a located at the top thereof, the battery cell 20 is located within the enclosure 10 and hung from the bearing member 11a, the electrode terminals 21a of the battery cell 20 are located on an outer surface of the battery cell 20 facing away from the bearing member 11a, and the bearing member 11a forms at least a part of the chassis of the vehicle 1000.

In this case, the battery cell 20 is hung from the bearing member 11a, such that strength of the bearing member 11a can be improved, and further strength of the top of the battery cell 20 can be improved. Thus, the bearing member 11a can satisfy certain stress requirements when serving as a chassis. Moreover, the electrode terminals 21a of the battery cell 20 face away from the bearing member 11a, such that the battery cell 20 can be directly mounted to the bearing member 11a, eliminating the gap between the battery cell 20 and the bearing member 11a. Moreover, the saved space can be used to increase a mounting space of the battery cell 20 such that energy of the battery pack 100 can be enhanced, which in turn can improve the range of the vehicle 1000.

Various technical features of the above embodiments can be combined in any manner, and in order to simplify the description, not all possible combinations of the various technical features of the above embodiments are described. However, the technical features should be considered to be within the scope of description in the description, as long as there is no conflict between the combinations of the technical features.

The above embodiments merely illustrate a plurality of implementations of the present application and are described relatively specifically and in detail, but should not be construed as limiting the scope of application patent It should be noted that several variations and improvements can also be made by those of ordinary skill in the art without departing from the concept of the present application, and should fall within the scope of protection of the present application. Therefore, the scope of protection of the patent for the present application shall be subject to the appended claims.

## Claims

1. A battery pack, comprising:
a battery cell; and
an enclosure, which encloses an accommodation chamber, wherein the enclosure comprises a bearing member located at a top of the enclosure and configured to delimit the accommodation chamber; wherein
the battery cell is accommodated in the accommodation chamber and hung from the bearing member.

2. The battery pack according to claim 1, wherein an outer surface of the battery cell facing the bearing member is a first outer surface, the battery cell comprises electrode terminals, and the electrode terminals are arranged on an outer surface of the battery cell other than the first outer surface.

3. The battery pack according to claim 2, wherein the battery cell is provided with a second outer surface facing away from the first outer surface, and the electrode terminals are arranged on the second outer surface.

4. The battery pack according to any one of claims 1-3, wherein the battery cell is bonded to the bearing member.

5. The battery pack according to any one of claims 1-3, wherein the enclosure comprises a bottom cover and a frame, the frame encloses a through cavity that is open at two ends in a vertical direction, the bottom cover and the bearing member respectively close the two ends, facing away from each other, of the cavity in the vertical direction, and the bottom cover, the frame and the bearing member jointly enclose the accommodation chamber.

6. The battery pack according to claim 5, wherein the bearing member and the frame are fixedly connected or integrally formed.

7. The battery pack according to claim 6, wherein the bearing member is provided with a bearing portion and a connecting portion, the connecting portion encloses and is connected to an edge of the bearing portion, the bearing portion is configured to delimit the accommodation chamber, and the connecting portion is connected to the frame; and
the battery cell is arranged on a surface of the bearing portion.

8. The battery pack according to claim 7, wherein the bearing portion protrudes in a direction away from the accommodation chamber relative to the connecting portion.

9. The battery pack according to any one of claims 5-8, wherein the bottom cover is provided with a cover portion and a mounting portion, the mounting portion encloses and is connected to an edge of the cover portion, the cover portion is configured to delimit the accommodation chamber, and the mounting portion is mounted to the frame.

10. The battery pack according to claim 9, wherein the cover portion protrudes in a direction away from the accommodation chamber relative to the mounting portion.

11. The battery pack according to claim 9 or 10, wherein the bottom cover and the battery cell are spaced apart.

12. The battery pack according to any one of claims 1-11, wherein in the vertical direction, a height Hc of the battery cell and a height Hp of the battery pack satisfy: 0.02 ≤ Hc/Hp ≤ 0.98.

13. A power consuming device, comprising the battery pack according to any one of claims 1-12, wherein the battery pack is configured to provide electrical energy for the power consuming device.

14. The power consuming device according to claim 13, comprising: a vehicle, wherein a battery pack is arranged at a bottom of a bodywork of the vehicle.

15. The power consuming device according to claim 14, wherein in a vertical direction, a distance L between the bearing member and the bodywork satisfies: L ≥ 0.

16. The power consuming device according to claim 15, wherein the battery pack is mounted to the bodywork by means of the bearing member.

17. The power consuming device according to claim 16, wherein the bearing member is configured to form at least a part of a chassis of the bodywork.
